# EUROPEAN PATENT APPLICATION

(11) **EP 4 572 296 A1**
(43) Date of publication of application: **18.06.2025**
(21) Application number: 23865752.2
(22) Date of filing: 22.08.2023
(51) Int. Cl.: H04M 1/02, F16C 11/04, G06F 1/16, H05K 5/06, H05K 7/20

(54) **ELECTRONIC DEVICE COMPRISING STRUCTURE FOR DISSIPATING HEAT GENERATED IN ELECTRONIC DEVICE**

(30) Priority: 13.09.2022 KR 20220115219; 05.10.2022 KR 20220126946
(71) Applicant: Samsung Electronics Co., Ltd., Suwon-si, Gyeonggi-do 16677 (KR)
(72) Inventor: LEE, Junghoon, Suwon-si Gyeonggi-do 16677 (KR); KIM, Kangsik, Suwon-si Gyeonggi-do 16677 (KR); RHEE, Bongjae, Suwon-si Gyeonggi-do 16677 (KR); KANG, Dongku, Suwon-si Gyeonggi-do 16677 (KR); KIM, Jihong, Suwon-si Gyeonggi-do 16677 (KR); MOON, Hongki, Suwon-si Gyeonggi-do 16677 (KR)
(74) Representative: HGF
(86) International application number: PCT/KR2023/012446
(87) International publication number: WO 2024/058453

(57) **Abstract**

An electronic device according to an embodiment comprises: a hinge structure including a first hinge plate, a second hinge plate, and a hinge bracket; a display; a plurality of reinforcement members including a first reinforcement member and a second reinforcement member and attached to the display; and a first heat dissipation member including a first area, a second area, and a third area which connects the first area and the second area to each other and can be deformed by movement of the first hinge plate and the second hinge plate, wherein, in an unfolded state of the electronic device where one surface of the first hinge plate faces the same direction as one surface of the second hinge plate, at least a part of the third area passes through the gap between the side surface of the first hinge plate and the side surface of the second hinge plate which are opposite to each other.

## Description

### [Technical Field]

Various embodiments of the present disclosure relate to an electronic device comprising a structure for dissipating heat generated in the electronic device.

### [Background Art]

There is increasing need for an electronic device in which a size of a display for displaying content may be changed so that a user may be provided with various contents through the electronic device. For example, the electronic device may provide a structure in which the size of the display for displaying contents may be changed as it includes a flexible display that may be folded.

### [Disclosure]

### [Technical Solution]

According to an embodiment, an electronic device may include a hinge structure including a hinge bracket, a first hinge plate rotatably coupled with respect to the hinge bracket, and a second hinge plate distinct from the first hinge plate and rotatably coupled with respect to the hinge bracket. According to an embodiment, the electronic device may include a display disposed on the first hinge plate and the second hinge plate across the hinge structure. According to an embodiment, the electronic device may include a plurality of reinforcing members, attached to the display, including a first reinforcing member facing a surface of the first hinge plate and spaced apart from the first hinge plate, and a second reinforcing member facing a surface of the second hinge plate and spaced apart from the second hinge plate. According to an embodiment, the electronic device may include a first heat dissipation member including a first region interposed between the first reinforcing member and the surface of the first hinge plate, a second region interposed between the second reinforcing member and the surface of the second hinge plate, and a third region connecting the first region and the second region and being deformable by movement of the first hinge plate and the second hinge plate. According to an embodiment, in an unfolded state of the electronic device in which a direction in which the surface of the first hinge plate faces is the same as a direction in which the surface of the second hinge plate faces, at least a portion of the third region may pass through a gap between a side surface of the first hinge plate and a side surface of the second hinge plate, which face each other.

According to an embodiment, an electronic device may include a first housing. According to an embodiment, the electronic device may include a second housing rotatable with respect to the first housing. According to an embodiment, the electronic device may include a hinge structure, rotatably coupling the first housing and the second housing, including a first hinge plate, a hinge bracket, a first hinge plate rotatably coupled with respect to the hinge bracket, and a second hinge plate distinct from the first hinge plate and rotatably coupled with respect to the hinge bracket. According to an embodiment, the electronic device may include a display disposed on the first housing and the second housing across the hinge structure. According to an embodiment, the electronic device may include a plurality of waterproof members, separating the display from the first hinge plate and the second hinge plate, including a first waterproof member disposed between the display and the first housing and a second waterproof member disposed between the display and the second housing. According to an embodiment, the electronic device may include a first heat dissipation member, having a thickness less than or equal to a thickness of each of the plurality of waterproof members, disposed between the first waterproof member and the second waterproof member. According to an embodiment, the first heat dissipation member may include a first region disposed on a surface of the first hinge plate facing the display. According to an embodiment, the first heat dissipation member may include a second region disposed on a surface of the second hinge plate facing the display. According to an embodiment, the first heat dissipation member may include a third region, connecting the first region and the second region, being deformable by movement of the first hinge plate and the second hinge plate. According to an embodiment, in an unfolded state of the electronic device in which a direction in which the surface of the first hinge plate faces is the same as a direction in which the surface of the second hinge plate faces, at least a portion of the third region may pass through a gap between a side surface of the first hinge plate and a side surface of the second hinge plate, which face each other.

### [Description of the Drawings]

FIG. 1 is a block diagram of an electronic device in a network environment according to a various embodiment.
FIG. 2A illustrates an example of an unfolded state of an exemplary electronic device according to an embodiment.
FIG. 2B illustrates an example of a folded state of an exemplary electronic device according to an embodiment.
FIG. 2C is an exploded view of an exemplary electronic device according to an embodiment.
FIG. 3A is a top plan view of an exemplary electronic device according to an embodiment.
FIG. 3B is a cross-sectional view illustrating an example in which an exemplary electronic device in an unfolded state is cut along line A-A' of FIG. 3A.
FIG. 3C is a cross-sectional view illustrating an example in which an exemplary electronic device in a folded state is cut along line A-A' of FIG. 3A.
FIG. 4A is a cross-sectional view illustrating an example cut along an exemplary electronic device in an unfolded state.
FIG. 4B is a cross-sectional view illustrating an example cut along an exemplary electronic device in a folded state.
FIG. 5A is a cross-sectional view illustrating an example cut along an exemplary electronic device in an unfolded state.
FIG. 5B is a cross-sectional view illustrating an example cut along an exemplary electronic device in a folded state.

### [Mode for Invention]

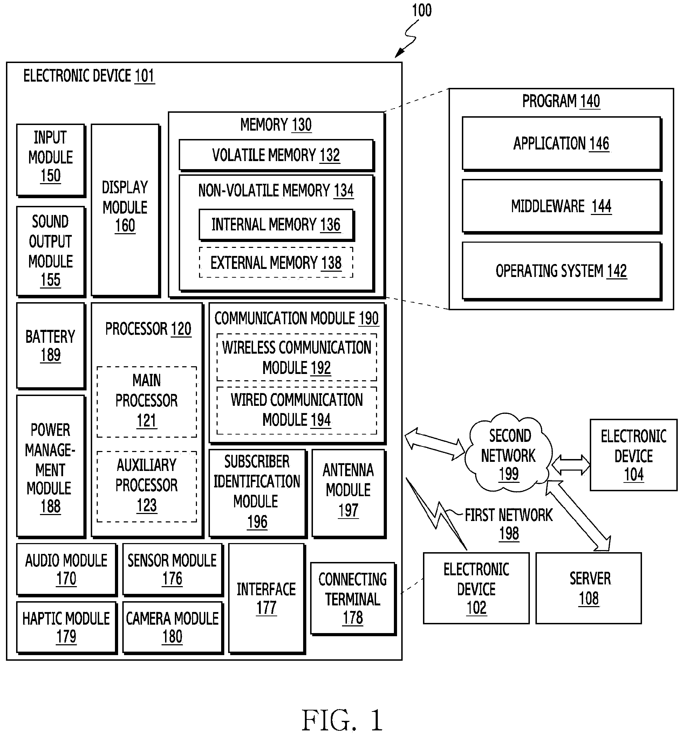

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

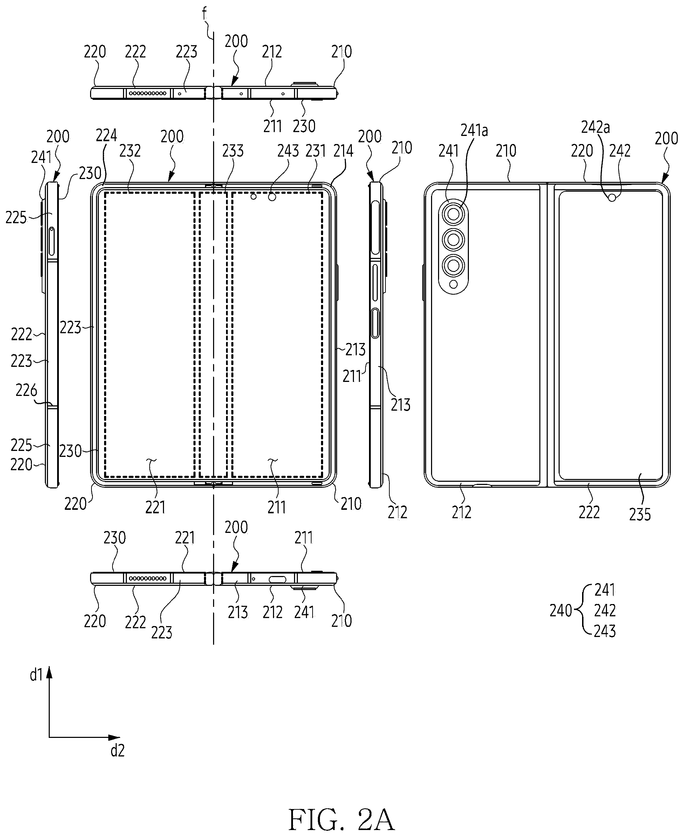

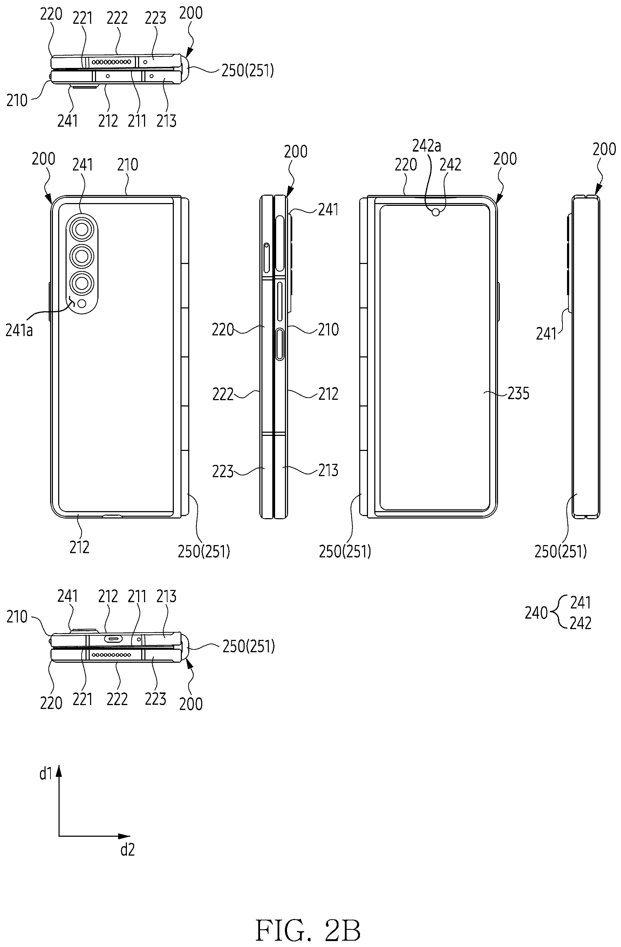

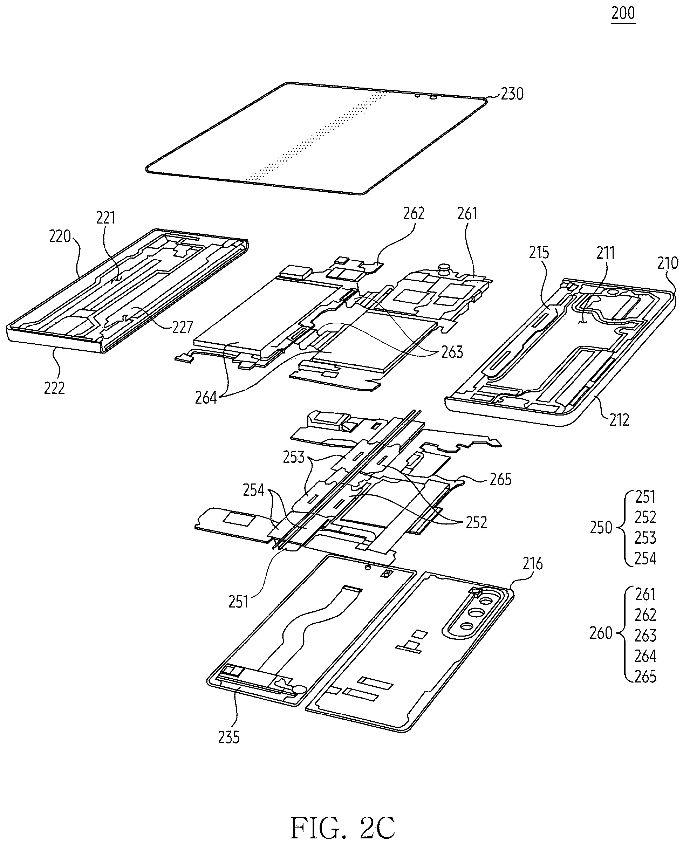

FIG. 2A illustrates an example of an unfolded state of an electronic device according to an embodiment, FIG. 2B illustrates an example of a folded state of an electronic device according to an embodiment, and FIG. 2C is an exploded view of an electronic device according to an embodiment.

Referring to FIGS. 2A, 2B, and 2C, an electronic device 200 (e.g., the electronic device 101 of FIG. 1) may include a first housing 210, a second housing 220, and a display 230 (e.g., the display module 160 of FIG. 1), at least one camera 240, a hinge structure 250, and/or at least one electronic component 260.

The first housing 210 and the second housing 220 may form at least a portion of an outer surface of the electronic device 200 that may be gripped by a user. At least a portion of the outer surface of the electronic device 200 defined by the first housing 210 and the second housing 220 may be in contact with a part of a body of a user when the electronic device 200 is used by the user. According to an embodiment, the first housing 210 may include a first surface 211, a second surface 212 facing the first surface 211 and spaced apart from the first surface 211, and a first side surface 213 surrounding at least a portion of the first surface 211 and the second surface 212. The first side surface 213 may connect a periphery of the first surface 211 and a periphery of the second surface 212. The first surface 211, the second surface 212, and the first side surface 213 may define an internal space of the first housing 210. According to an embodiment, the first housing 210 may provide a space formed by the first surface 211, the second surface 212, and the first side surface 213 as a space for disposing components of the electronic device 101.

According to an embodiment, the second housing 220 may include a third surface 221, a fourth surface 222 facing the third surface 221 and spaced apart from the third surface 221, and a second side surface 223 surrounding at least a portion of the third surface 221 and the fourth surface 222. The second side surface 223 may connect a periphery of the third surface 221 and a periphery of the fourth surface 222. The third surface 221, the fourth surface 222, and the second side surface 223 may define an internal space of the second housing 220. According to an embodiment, the second housing 220 may provide a space formed by the third surface 221, the fourth surface 222, and the second side surface 223 surrounding at least a portion of the third surface 221 and the fourth surface 222 as a space for mounting components of the electronic device 101. According to an embodiment, the second housing 220 may be coupled to the first housing 210 so as to be rotatable with respect to the first housing 210.

According to an embodiment, each of the first housing 210 and the second housing 220 may include each of a first protection member 214 and a second protection member 224. The first protection member 214 and the second protection member 224 may be disposed on the first surface 211 and the third surface 221 along a periphery of the display 230. According to an embodiment, the first protection member 214 and the second protection member 224 may prevent an inflow of a foreign substance (e.g., dust or moisture) through a gap between the display 230, the first housing 210 and the second housing 220. For example, the first protection member 214 may surround a periphery of a first display region 231 of the display 230, and the second protection member 224 may surround a periphery of a second display region 232 of the display 230. The first protection member 214 may be formed by being attached to the first side surface 213 of the first housing 210, or may be integrally formed with the first side surface 213. The second protection member 224 may be formed by being attached to the second side surface 223 of the second housing 220, or may be integrally formed with the second side surface 223.

According to an embodiment, the first side surface 213 and the second side surface 223 may include a conductive material, a non-conductive material, or a combination thereof. For example, the second side surface 223 may include at least one conductive member 225 and at least one non-conductive member 226. The at least one conductive member 225 may include a plurality of conductive members spaced apart from each other. The at least one non-conductive member 226 may be disposed between the plurality of conductive members. The plurality of conductive members may be disconnected from each other, by the at least one non-conductive member 226 disposed between the plurality of conductive members. According to an embodiment, the plurality of conductive members and the plurality of non-conductive members may form an antenna radiator together. The electronic device 200 may communicate with an external electronic device through the antenna radiator formed by the plurality of conductive members and the plurality of non-conductive members.

The display 230 may be configured to display visual information. According to an embodiment, the display 230 may be disposed on the first surface 211 of the first housing 210 and the third surface 221 of the second housing 220 across the hinge structure 250. For example, the display 230 may include the first display region 231 disposed on the first surface 211 of the first housing, the second display region 232 disposed on the third surface 221 of the second housing, and a third display region 233 disposed between the first display region 231 and the second display region 232. The first display region 231, the second display region 232, and the third display region 233 may form a front surface of the display 230. According to an embodiment, the display 230 may further include a sub-display panel 235 disposed in the fourth surface 222 of the second housing 220. For example, the display 230 may be referred to as a flexible display 230. According to an embodiment, the display 230 may include a window exposed toward the outside of the electronic device 200. The window may protect an external surface of the display 230, and transfer the visual information provided by the display 230 to the outside of the electronic device 200 by including a substantially transparent material. For example, the window may include glass (e.g., ultra-thin glass (UTG)) and/or polymer (e.g., polyimide (PI)), but is not limited thereto.

The at least one camera 240 may be configured to obtain an image, based on receiving light from an external subject of the electronic device 200. According to an embodiment, the at least one camera 240 may include first cameras 241, a second camera 242, and a third camera 243. The first cameras 241 may be disposed in the first housing 210. For example, the first cameras 241 may be disposed inside the first housing 210, and at least a portion of the first cameras 241 may be visible through the second surface 212 of the first housing 210. The first cameras 241 may be supported by a bracket (not illustrated) in the first housing 210. The first housing 210 may include at least one opening 241a overlapping the first cameras 241 when the electronic device 200 is viewed from above. The first cameras 241 may obtain an image based on receiving light from the outside of the electronic device 200 through the at least one opening 241a.

According to an embodiment, the second camera 242 may be disposed in the second housing 220. For example, the second camera 242 may be disposed inside the second housing 220, and may be visible through the sub-display panel 235. The second housing 220 may include at least one opening 242a overlapping the second camera 242 when the electronic device 200 is viewed from above. The second camera 242 may obtain an image, based on receiving light from the outside of the electronic device 200 through the at least one opening 242a.

According to an embodiment, the third camera 243 may be disposed in the first housing 210. For example, the third camera 243 may be disposed inside the first housing 210, and at least a portion of the third camera 243 may be visible through the first surface 211 of the first housing 210. For another example, the third camera 243 may be disposed inside the first housing 210, and at least a portion of the third camera 243 may be visible through the first display region 231 of the display 230. The first display region 231 of the display 230 may include at least one opening overlapping the third camera 243 when the display 230 is viewed from above. The third camera 243 may obtain an image based on receiving light from the outside of the display 230 through at least one opening.

According to an embodiment, the second camera 242 and the third camera 243 may be disposed under (e.g., in a direction facing the inside of the first housing 210 or the inside of the second housing 220) the display 230. For example, the second camera 242 and the third camera 243 may be a under display camera (UDC). In case that the second camera 242 and the third camera 243 are the under-display cameras, a region of the display 230 corresponding to a location of each of the second camera 242 and the third camera 243 may not be an inactive region. The inactive region of the display 230 may mean a region of the display 230 that does not include a pixel or does not emit light to the outside of the electronic device 200. For another example, the second camera 242 and the third camera 243 may be a punch hole camera. In case that the second camera 242 and the third camera 243 are the punch hole cameras, the region of the display 230 corresponding to the location of each of the second camera 242 and the third camera 243 may be the inactive region.

According to an embodiment, the hinge structure 250 may rotatably connect the first housing 210 and the second housing 220. The hinge structure 250 may be disposed between the first housing 210 and the second housing 220 of the electronic device 101 so that the electronic device 200 may be bent, curved, or folded. For example, the hinge structure 250 may be disposed between a portion of the first side surface 213 and a portion of the second side surface 223 which face each other. The hinge structure 250 may change the electronic device 200 into an unfolding state in which a direction in which the first surface 211 of the first housing 210 faces is substantially the same as a direction in which the third surface 221 of the second housing 220 faces, or into a folding state in which the first surface 211 and the third surface 221 face each other. When the electronic device 200 is in the folded state, the first housing 210 and the second housing 220 may be stacked or overlapped by facing each other.

According to an embodiment, when the electronic device 200 is in the folded state, the direction in which the first surface 211 faces and the direction in which the third surface 221 faces may be different from each other. For example, when the electronic device 200 is in the folded state, the direction in which the first surface 211 faces and the direction in which the third surface 221 faces may be opposite to each other. For another example, when the electronic device 200 is in the folded state, the direction in which the first surface 211 faces and the direction in which the third surface 221 faces may be inclined with respect to each other. In case that the direction in which the first surface 211 faces is inclined with respect to the direction in which the third surface 221 faces, the first housing 210 may be inclined with respect to the second housing 220.

According to an embodiment, the electronic device 200 may be foldable based on a folding axis f. The folding axis f may mean a virtual line extending through a hinge cover 251 in a direction (e.g., d1 of FIG. 2A and FIG. 2B) parallel to a longitudinal direction of the electronic device 200, but is not limited thereto. For example, the folding axis f may be a virtual line extending in a direction (e.g., d2 of FIG. 2A and FIG. 2B) perpendicular to the longitudinal direction of the electronic device 200. In case that the folding axis f extends in the direction perpendicular to the longitudinal direction of the electronic device 200, the hinge structure 250 may connect the first housing 210 and the second housing 220, by extending in the direction parallel to the folding axis f. The first housing 210 and the second housing 220 may be rotatable by the hinge structure 250 extending in the direction perpendicular to the longitudinal direction of the electronic device 200.

According to an embodiment, the hinge structure 250 may include the hinge cover 251, a first hinge plate 252, a second hinge plate 253, and a hinge module 254. The hinge cover 251 may surround internal components of the hinge structure 250, and form an outer surface of the hinge structure 250. According to an embodiment, when the electronic device 200 is in the folded state, at least a portion of the hinge cover 251 surrounding the hinge structure 250 may be exposed to the outside of the electronic device 200 through a space between the first housing 210 and the second housing 220. According to another embodiment, when the electronic device 200 is in the unfolded state, the hinge cover 251 may not be exposed to the outside of the electronic device 200, by being covered by the first housing 210 and the second housing 220.

According to an embodiment, the first hinge plate 252 and the second hinge plate 253 may rotatably connect the first housing 210 and the second housing 220 by being coupled to the first housing 210 and the second housing 220, respectively. For example, the first hinge plate 252 may be coupled to a first front bracket 215 of the first housing 210, and the second hinge plate 253 may be coupled to a second front bracket 227 of the second housing 220. As the first hinge plate 252 and the second hinge plate 253 are coupled to the first front bracket 215 and the second front bracket 227, respectively, the first housing 210 and the second housing 220 may be rotatable according to rotation of the first hinge plate 252 and the second hinge plate 253.

The hinge module 254 may rotate the first hinge plate 252 and the second hinge plate 253. For example, the hinge module 254 may rotate the first hinge plate 252 and the second hinge plate 253 based on the folding axis f, by including gears that may be engaged and rotated. According to an embodiment, the hinge modules 254 may be plural. For example, a plurality of hinge modules 254 may be respectively disposed by being spaced apart from each other at both ends of the first hinge plate 252 and the second hinge plate 253.

According to an embodiment, the first housing 210 may include the first front bracket 215 and a rear bracket 216, and the second housing 220 may include the second front bracket 227. The first front bracket 215 and the rear bracket 216 may be disposed inside the first housing 210 and support components of the electronic device 200. The second front bracket 227 may be disposed inside the second housing 220 and support components of the electronic device 200. For example, the display 230 may be disposed on a surface of the first front bracket 215 and a surface of the second front bracket 227. The rear bracket 216 may be disposed on another surface of the first front bracket 215 facing the surface of the first front bracket 215. The sub-display panel 235 may be disposed in the rear bracket 216.

According to an embodiment, a portion of the first front bracket 215 may be surrounded by the first side surface 213, and a portion of the second front bracket 227 may be surrounded by the second side surface 223. For example, the first front bracket 215 may be integrally formed with the first side surface 213, and the second front bracket 227 may be integrally formed with the second side surface 223. For another example, the first front bracket 215 may be formed separately from the first side surface 213, and the second front bracket 227 may be formed separately from the second side surface 223.

The at least one electronic component 260 may implement various functions for providing to a user. According to an embodiment, the at least one electronic component 260 may include a first printed circuit board 261, a second printed circuit board 262, a flexible printed circuit board 263, a battery 264, and/or an antenna 265. Each of the first printed circuit board 261 and the second printed circuit board 262 may form an electrical connection of components in the electronic device 200. For example, components (e.g., the processor 120 of FIG. 1) for implementing an overall function of the electronic device 200 may be disposed on the first printed circuit board 261, and electronic components for implementing a partial function of the first printed circuit board 261 may be disposed on the second printed circuit board 262. For another example, components for an operation of the sub-display panel 235 disposed on the fourth surface 222 may be disposed on the second printed circuit board 262.

According to an embodiment, the first printed circuit board 261 may be disposed in the first housing 210. For example, the first printed circuit board 261 may be disposed on a surface of the first front bracket 215. According to an embodiment, the second printed circuit board 262 may be disposed in the second housing 220. For example, the second printed circuit board 262 may be spaced apart from the first printed circuit board 261 and disposed on a surface of the second front bracket 227. The flexible printed circuit board 263 may connect the first printed circuit board 261 and the second printed circuit board 262. For example, the flexible printed circuit board 263 may extend from the first printed circuit board 261 to the second printed circuit board 262.

The battery 264, which is a device for supplying power to at least one component of the electronic device 200, for example, may include a non-rechargeable primary battery, or a rechargeable secondary battery, or a fuel cell. At least a portion of the battery 264 may be disposed substantially on the same plane as the first printed circuit board 261 or the second printed circuit board 262.

The antenna 265 may be configured to receive the power or a signal from the outside of the electronic device 200. According to an embodiment, the antenna 265 may be disposed between the rear bracket 216 and the battery 264. For example, the antenna 265 may include a near field communication (NFC) antenna, an antenna module, and/or a magnetic secure transmission (MST) antenna. For example, the antenna 265 may perform short-range communication with an external device, or wirelessly transmit and receive the power required for charging.

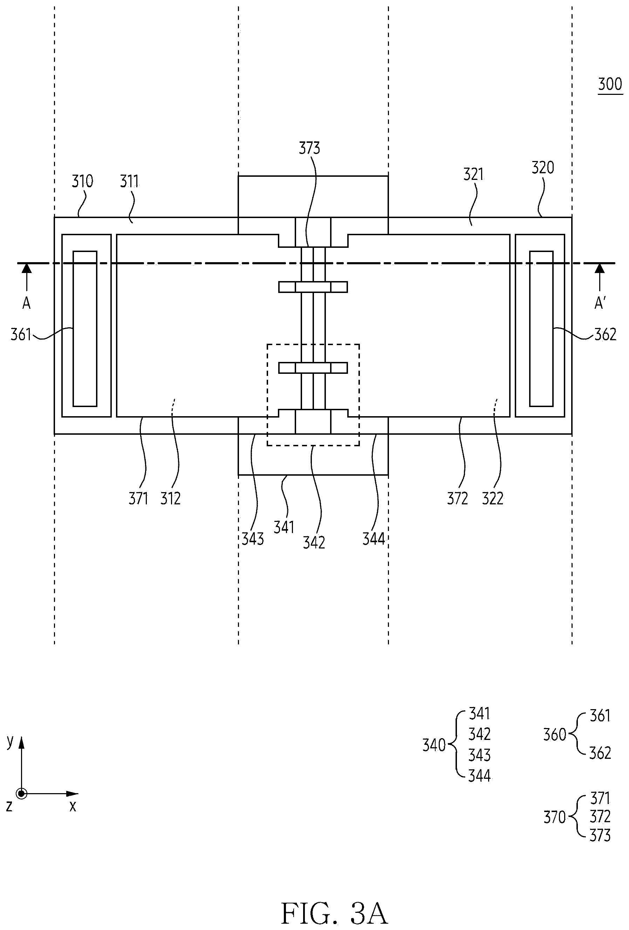

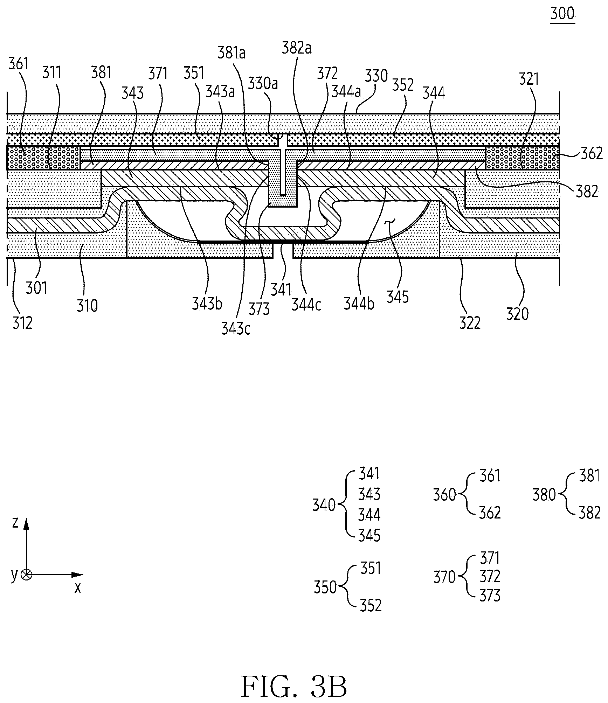

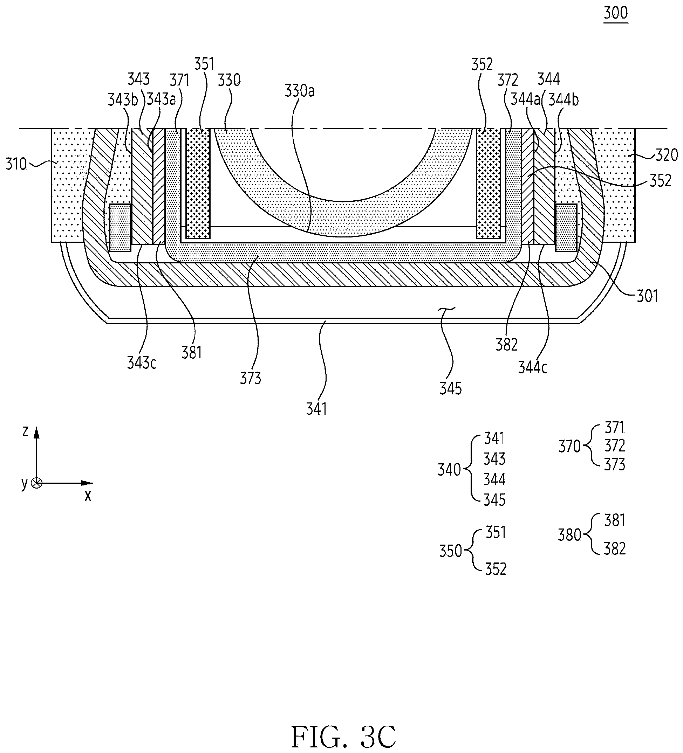

FIG. 3A is a top plan view of an exemplary electronic device according to an embodiment, FIG. 3B is a cross-sectional view illustrating an example in which an exemplary electronic device in an unfolded state is cut along line A-A' of FIG. 3A, and FIG. 3C is a cross-sectional view illustrating an example in which an exemplary electronic device in a folded state is cut along line A-A' of FIG. 3A.

Referring to FIG. 3A, FIG. 3B, and FIG. 3C, according to an embodiment, an electronic device 300 (e.g., the electronic device 101 of FIG. 1 and/or the electronic device 200 of FIG. 2A, FIG. 2B, and FIG. 2C) may include a first housing 310 (e.g., the first housing 210 of FIG. 2A, FIG. 2B, and FIG. 2C), a second housing 320 (e.g., the second housing 220 of FIG. 2A, FIG. 2B, and FIG. 2C), a display 330 (e.g., the display 230 of FIG. 2A, FIG. 2B, and FIG. 2C), a hinge structure 340 (e.g., the hinge structure 250 of FIG. 2A, FIG. 2B, and FIG. 2C), a plurality of reinforcing members 350, a plurality of waterproof members 360, a first heat dissipation member 370, and/or a plurality of adhesive members 380. The first housing 310 may be movable with respect to the second housing 320.

According to an embodiment, the first housing 310 may support a portion of the display 330. The first housing 310 may be movable with respect to the second housing 320. For example, the first housing 310 may be rotatable with respect to the second housing 320. According to an embodiment, the first housing 310 may include a first surface 311 (e.g., the first surface 211 of FIG. 2A, FIG. 2B, and FIG. 2C), and a second surface 312 (e.g., the second surface 212 of FIG. 2A, FIG. 2B, and FIG. 2C). The first surface 311 may support the portion of the display 330. The first surface 311 may be an intemal surface of the first housing 310 facing the portion of the display 330. The second surface 312 may be opposite to the first surface 311. For example, a direction in which the second surface 312 faces may be opposite to a direction in which the first surface 311 faces. The second surface 312 may mean an outer surface of the first housing 310 opposite to the first surface 311.

According to an embodiment, the second housing 320 may support another portion of the display 330. The second housing 320 may be movable with respect to the first housing 310. For example, the second housing 320 may be rotatable with respect to the first housing 310. According to an embodiment, the second housing 320 may include a third surface 321 (e.g., the third surface 321 of FIG. 2A, FIG. 2B, and FIG. 2C), and a fourth surface 322 (e.g., the fourth surface 222 of FIG. 2A, FIG. 2B, and FIG. 2C). The third surface 321 may support the other portion of the display 330. The third surface 321 may be an internal surface of the second housing 320 facing the other portion of the display 330. The fourth surface 322 may be opposite to the third surface 321. For example, a direction in which the fourth surface 322 faces may be opposite to a direction in which the third surface 321 faces. The fourth surface 322 may mean an outer surface of the second housing 320 opposite to the third surface 321.

According to an embodiment, the display 330 may be supported by the first housing 310 and the second housing 320. The display 330 may be disposed on the first housing 310 and the second housing 320 across the hinge structure 340. It should be understood that when an element is mentioned as being "on" another element, it may be that there is directly on the other element, or it may be that intervening elements exist therebetween. In contrast, when an element is referred to as being "directly on" another element, no intervening elements exist. According to an embodiment, the display 330 may be foldable by movement of the second housing 320 with respect to the first housing 310. For example, as a state of the electronic device 300 changes from an unfolded state in which a direction in which the first surface 311 faces is substantially the same as a direction in which the third surface 321 faces to a folded state in which the first surface 311 and the third surface 321 face, the display 330 may be folded. In the folded state of the electronic device 300, at least a portion of the display 330 be bent with a curvature. For example, as the state of the electronic device 300 changes from the folded state to the unfolded state, the display 330 may be unfolded. In the unfolded state of the electronic device 300, the display 330 may be substantially parallel to the first surface 311 of the first housing 310 and the third surface 321 of the second housing 320.

According to an embodiment, the hinge structure 340 may rotatably couple the first housing 310 and the second housing 320. For example, the first housing 310 may be coupled to the second housing 320 so as to be rotatable with respect to the second housing 320 through the hinge structure 340. For example, the second housing 320 may be coupled to the first housing 310 so as to be rotatable with respect to the first housing 310 through the hinge structure 340. The hinge structure 340 may fold or unfold the display 330, based on receiving a driving force from the first housing 310 or the second housing 320. According to an embodiment, the hinge structure 340 may include a hinge cover 341, a hinge bracket 342, a first hinge plate 343, a second hinge plate 344, and/or an internal space 345.

The hinge cover 341 may define an outer surface of the hinge structure 340. For example, the hinge cover 341 may surround the hinge bracket 342, the first hinge plate 343, and the second hinge plate 344. According to an embodiment, the hinge cover 341 may be covered by the first housing 310 and the second housing 320 in the unfolded state of the electronic device 300. The hinge cover 341 may be exposed to the outside of the electronic device 300 within the folded state of the electronic device 300.

The hinge bracket 342 may support the first hinge plate 343 and the second hinge plate 344. According to an embodiment, the hinge bracket 342 may be coupled to the first hinge plate 343 and the second hinge plate 344. For example, the first hinge plate 343 may be coupled to the hinge bracket 342 so as to be rotatable with respect to the hinge bracket 342. For example, the second hinge plate 344 may be coupled to the hinge bracket 342 so as to be rotatable with respect to the hinge bracket 342. According to an embodiment, the hinge bracket 342 may provide a rotation axis of each of the first hinge plate 343 and the second hinge plate 344. For example, the hinge bracket 342 may include a groove that accommodates each of the first hinge plate 343 and the second hinge plate 344. In case that the hinge bracket 342 includes the groove, each of the first hinge plate 343 and the second hinge plate 344 may be rotatable along the groove of the hinge bracket 342. According to an embodiment, the hinge bracket 342 may be disposed in the hinge cover 341. For example, the hinge bracket 342 may be surrounded by the hinge cover 341.

The first hinge plate 343 may be rotatable with respect to the hinge cover 341. The first hinge plate 343 may be rotatable with respect to the hinge bracket 342. According to an embodiment, the first hinge plate 343 may fold the display 330. For example, the display 330 may be disposed on the first hinge plate 343 across the hinge structure 340. For example, the display 330 may be disposed above the first hinge plate 343 across the hinge structure 340. The first hinge plate 343 may rotate together with the first housing 310 when the first housing 310 rotates. When the first housing 310 rotates, the first hinge plate 343 may fold the display 330 disposed above the first hinge plate 343 as the first hinge plate 343 rotates with respect to the hinge bracket 342. According to an embodiment, an angle range of the first hinge plate 343 rotatable with respect to the hinge bracket 342 may correspond to an angle range of the first housing 310 rotatable with respect to the second housing 320. For example, the angle range of the first hinge plate 343 rotatable with respect to the hinge bracket 342 may be the same as the angle range of the first housing 310 rotatable with respect to the second housing 320. For example, the angle range of the first hinge plate 343 rotatable with respect to the hinge bracket 342 and the angle range of the first housing 310 rotatable with respect to the second housing 320 may be 0 degree to 90 degrees. However, it is not limited thereto. For example, the angle range of the first hinge plate 343 rotatable with respect to the hinge bracket 342 may be different from the angle range of the first housing 310 rotatable with respect to the second housing 320. The angle range of the first hinge plate 343 rotatable with respect to the hinge bracket 342 may be greater than the angle range of the first housing 310 rotatable with respect to the second housing 320. For example, the angle range of the first hinge plate 343 rotatable with respect to the hinge bracket 342 may be 0 degree to 100 degrees, and the angle range of the first housing 310 rotatable with respect to the second housing 320 may be 0 degree to 90 degrees.

The second hinge plate 344 may be rotatable with respect to the hinge cover 341. The second hinge plate 344 may be rotatable with respect to the hinge bracket 342. According to an embodiment, the second hinge plate 344 may fold the display 330. For example, the display 330 may be disposed on the second hinge plate 344 across the hinge structure 340. For example, the display 330 may be disposed above the second hinge plate 344 across the hinge structure 340. The second hinge plate 344 may rotate together with the second housing 320 when the second housing 320 rotates. When the second housing 320 rotates, the second hinge plate 344 may fold the display 330 disposed over the second hinge plate 344 as the second hinge plate 344 rotates with respect to the hinge bracket 342. According to an embodiment, an angle range of the second hinge plate 344 rotatable with respect to the hinge bracket 342 may correspond to an angle range of the second housing 320 rotatable with respect to the first housing 310. For example, the angle range of the second hinge plate 344 rotatable with respect to the hinge bracket 342 may be the same as the angle range of the second housing 320 rotatable with respect to the first housing 310. For example, the angle range of the second hinge plate 344 rotatable with respect to the hinge bracket 342 and the angle range of the second housing 320 rotatable with respect to the first housing 310 may be 0 degree to 90 degrees. However, it is not limited thereto. For example, the angle range of the second hinge plate 344 rotatable with respect to the hinge bracket 342 may be different from the angle range of the second housing 320 rotatable with respect to the first housing 310. The angle range of the second hinge plate 344 rotatable with respect to the hinge bracket 342 may be greater than the angle range of the second housing 320 rotatable with respect to the first housing 310. For example, the angle range of the second hinge plate 344 rotatable with respect to the hinge bracket 342 may be 0 degree to 100 degrees, and the angle range of the second housing 320 rotatable with respect to the first housing 310 may be 0 degree to 90 degrees. According to an embodiment, the second hinge plate 344 may be rotatable independently of the first hinge plate 343 on the hinge bracket 342. For example, the second hinge plate 344 may be rotatable independently of the first hinge plate 343 as the second hinge plate 344 is spaced apart from the first hinge plate 343.

According to an embodiment, in the unfolded state of the electronic device 300, a direction in which a surface 343a of the first hinge plate 343 faces may be substantially the same as a direction of a surface 344a in which the second hinge plate 344 faces. For example, in the unfolded state of the electronic device 300, the direction (e.g., +z direction) in which the surface 343a of the first hinge plate 343 faces may be the same as the direction (e.g., +z direction) in which the surface 344a of the second hinge plate 344 faces. The surface 343a of the first hinge plate 343 may face an intemal surface 330a of the display 330. The surface 343a of the first hinge plate 343 may be spaced apart from the internal surface 330a of the display 330. The surface 344a of the second hinge plate 344 may face the internal surface 330a of the display 330. The surface 344a of the second hinge plate 344 may be spaced apart from the intemal surface 330a of the display 330.

According to an embodiment, in the unfolded state of the electronic device 300, a direction (e.g., -z direction) in which another surface 343b of the first hinge plate 343 faces may be substantially the same as the direction (e.g., -z direction) in which another surface 344b of the second hinge plate 344 faces. For example, in the unfolded state of the electronic device 300, the direction in which the other surface 343b of the first hinge plate 343 faces may be the same as the direction in which the other surface 344b of the second hinge plate 344 faces. The other surface 343b of the first hinge plate 343 may be opposite to the surface 343a of the first hinge plate 343. For example, the direction in which the other surface 343b of the first hinge plate 343 faces may be opposite to the direction in which the surface 343a of the first hinge plate 343 faces. The other surface 344b of the second hinge plate 344 may be opposite to the surface 344a of the second hinge plate 344. For example, the direction in which the other surface 344b of the second hinge plate 344 faces may be opposite to the direction in which the surface 344a of the second hinge plate 344 faces.

According to an embodiment, in the unfolded state of the electronic device 300, a side surface 343c of the first hinge plate 343 may face a side surface 344c of the second hinge plate 344. For example, in the unfolded state of the electronic device 300, a direction (e.g., -x direction) in which the side surface 343c of the first hinge plate 343 faces may be opposite to a direction (e.g., +x direction) in which the side surface 344c of the second hinge plate 344 faces. The side surface 343c of the first hinge plate 343 may connect the surface 343a of the first hinge plate 343 and the other surface 343b of the first hinge plate 343. For example, the side surface 343c of the first hinge plate 343 may be perpendicular to the surface 343a of the first hinge plate 343. The side surface 344c of the second hinge plate 344 may connect the surface 344a of the second hinge plate 344 and the other surface 344b of the second hinge plate 344. For example, the side surface 344c of the second hinge plate 344 may be perpendicular to the surface 344a of the second hinge plate 344.

According to an embodiment, as the state of the electronic device 300 changes from the unfolded state to the folded state, a distance between the first hinge plate 343 and the second hinge plate 344 may increase. For example, as the state of the electronic device 300 changes from the unfolded state to the folded state, a distance between the surface 343a of the first hinge plate 343 and the surface 344a of the second hinge plate 344 may increase.

According to an embodiment, in the folded state of the electronic device 300, the surface 343a of the first hinge plate 343 may face the surface 344a of the second hinge plate 344. For example, in the folded state of the electronic device 300, a direction (e.g., +x direction) in which the surface 344a of the first hinge plate 343 faces may be opposite to a direction (e.g., -x direction) in which the side surface 344c of the second hinge plate 344 faces. According to an embodiment, in the folded state of the electronic device 300, a direction (e.g., -x direction) in which the other surface 343b of the first hinge plate 343 faces may be opposite to a direction (e.g., +x direction) in which the other surface 344b of the second hinge plate 344 faces. According to an embodiment, in the folded state of the electronic device 300, the direction (e.g., -z direction) in which the side surface 343c of the first hinge plate 343 faces may correspond to the direction (e.g., -z direction) in which the side surface 344c of the second hinge plate 344 faces. For example, in the folded state of the electronic device 300, the direction in which the side surface 343c of the first hinge plate 343 faces may be the same as the direction in which the side surface 344c of the second hinge plate 344 faces.

The internal space 345 of the hinge structure 340 may be disposed between the first housing 310 and the second housing 320. According to an embodiment, the internal space 345 of the hinge structure 340 may mean an empty space disposed between the first hinge plate 343 and the second hinge plate 344, and the hinge cover 341. For example, in the unfolded state of the electronic device 300, the intemal space 345 of the hinge structure 340 may be disposed on the other surface 343b of the first hinge plate 343, and the other surface 344b of the second hinge plate 344. According to an embodiment, the electronic device 300 may include a flexible printed circuit board 301. The flexible printed circuit board 301 may extend from the first housing 310 to the second housing 320 across the hinge structure 340. The flexible printed circuit board 301 may form an electrical connection between the electronic components in the first housing 310 and the electronic components in the second housing 320. According to an embodiment, the flexible printed circuit board 301 may pass through the internal space 345 of the hinge structure 340. For example, in the unfolded state of the electronic device 300, the flexible printed circuit board 301 may be disposed on the other surface 343b of the first hinge plate 343 and the other surface 344b of the second hinge plate 344. For example, at least a portion of the flexible printed circuit board 301 may be in contact with the other surface 343a of the first hinge plate 343 and the other surface 344a of the second hinge plate 344. For example, the at least a portion of the flexible printed circuit board 301 may be spaced apart from the other surface 343a of the first hinge plate 343 and the other surface 344a of the second hinge plate 344.

The plurality of reinforcing members 350 may support the display 330. According to an embodiment, the plurality of reinforcing members 350 may be attached to the display 330. For example, according to an embodiment, the plurality of reinforcing members 350 may be attached on the intemal surface 330a of the display 330. The plurality of reinforcing members 350 may be spaced apart from the hinge structure 340, as the plurality of reinforcing members 350 are attached on the intemal surface 330a of the display 330, disposed above the hinge structure 340. According to an embodiment, the plurality of reinforcing members 350 may reinforce rigidity of the display 330. For example, the plurality of reinforcing members 350 may be made of a material (e.g., metal) having rigidity. For example, the plurality of reinforcing members 350 may be referred to as a stiffener. According to an embodiment, the plurality of reinforcing members 350 may include a first reinforcing member 351 and a second reinforcing member 352.

The first reinforcing member 351 may be disposed on the first hinge plate 343 and the first housing 310. According to an embodiment, the first reinforcing member 351 may be spaced apart from the first hinge plate 343. For example, the first reinforcing member 351 may be spaced apart from the surface 343a of the first hinge plate 343 in the direction in which the surface 343a of the first hinge plate 343 faces. According to an embodiment, the first reinforcing member 351 may be located in the direction (e.g., +z direction) in which the surface 343a of the first hinge plate 343 faces. For example, the surface of the first reinforcing member 351 may be disposed on the intemal surface 330a of the display 330, and the other surface of the first reinforcing member 351 opposite to the surface of the first reinforcing member 351 may face the surface 343a of the first hinge plate 343.

The second reinforcing member 352 may be disposed on the second hinge plate 344 and the second housing 320. According to an embodiment, the second reinforcing member 352 may be spaced apart from the second hinge plate 344. For example, the second reinforcing member 352 may be spaced apart from the surface 344a of the second hinge plate 344 in the direction in which the surface 344a of the second hinge plate 344 faces. According to an embodiment, the second reinforcing member 352 may be located in the direction (e.g., +z direction) in which the surface 344a of the second hinge plate 344 faces. For example, the surface of the second reinforcing member 352 may be disposed on the internal surface 330a of the display 330, and the other surface of the second reinforcing member 352 opposite to the surface of the second reinforcing member 352 may face the surface 344a of the second hinge plate 344. According to an embodiment, the second reinforcing member 352 may be spaced apart from the first reinforcing member 351. For example, the second reinforcing member 352 and the first reinforcing member 351 may be separated from each other. For example, in case that the plurality of reinforcing members 350 are integrally formed, the plurality of reinforcing members 350 may be damaged by folding the display 330. According to an embodiment, the electronic device 300 may provide a structure capable of reducing damage to the plurality of reinforcing members 350 due to folding the display 330, by the first reinforcing member 351 and the second reinforcing member 352 spaced apart from each other.

The plurality of waterproof members 360 may reduce inflow of moisture into the inside of the electronic device 300. According to an embodiment, the plurality of waterproof members 360 may be disposed on the first housing 310 and the second housing 320. For example, the plurality of waterproof members 360 may be disposed along a periphery of the first housing 310 and a periphery of the second housing 320. According to an embodiment, the plurality of waterproof members 360 may attach the display 330 on the first housing 310 and the second housing 320. For example, the plurality of waterproof members 360 may be attached to the plurality of reinforcing members 350 disposed on the internal surface 330a of the display 330. For example, the plurality of waterproof members 360 may be a tape including an adhesive material, but are not limited thereto. According to an embodiment, the plurality of waterproof members 360 may include a first waterproof member 361 and a second waterproof member 362. The first waterproof member 361 may be disposed on the first housing 310. According to an embodiment, the first waterproof member 361 may be disposed between the display 330 and the first housing 310. For example, the first waterproof member 361 may be disposed between the first waterproof member 361 and the first housing 310. The second waterproof member 362 may be disposed on the second housing 320. According to an embodiment, the second waterproof member 362 may be disposed between the display 330 and the second housing 320. For example, the second waterproof member 362 may be disposed between the second reinforcing member 352 and the second housing 320. According to an embodiment, the second waterproof member 362 may be spaced apart from the first waterproof member 361. For example, the hinge structure 340 may be disposed between the first waterproof member 361 and the second waterproof member 362.

According to an embodiment, the plurality of waterproof members 360 may separate the display 330 from the first hinge plate 343 and the second hinge plate 344. For example, the display 330 may be spaced apart from the first hinge plate 343 and the second hinge plate 344 by a thickness of each of the plurality of waterproof members 360. In the unfolded state of the electronic device 300, a thickness of a component may mean a distance extending in a direction (e.g., -z direction) parallel to a direction in which the intemal surface 330a of the display 330 faces, and a corresponding expression may be used in the same manner below unless otherwise stated. The first waterproof member 361 may separate the display 330 from the first hinge plate 343. The second waterproof member 362 may separate the display 330 from the second hinge plate 344.

The first heat dissipation member 370 may dissipate heat generated inside the electronic device 300. For example, the first heat dissipation member 370 may transmit heat generated in the first housing 310 to the second housing 320, or transmit heat generated in the second housing 320 to the first housing 310. As the first heat dissipation member 370 dissipates the heat generated inside the electronic device 300, the heat may not be concentrated inside the electronic device 300. For example, in case that the heat generated in the first housing 310 is concentrated inside the first housing 310, the heat may deteriorate performance of the electronic components in the first housing 310 by being transmitted to the electronic components in the first housing 310. According to an embodiment, the electronic device 300 may provide a structure capable of securing the performance of the electronic components of the electronic device 300 by the first heat dissipation member 370 for dissipating the heat generated in the electronic device 300. According to an embodiment, the first heat dissipation member 370 may be made of a material having high thermal conductivity. For example, the first heat dissipation member 370 may include graphite, but is not limited thereto.

According to an embodiment, the first heat dissipation member 370 may extend from the first housing 310 to the second housing 320 across the hinge structure 340. For example, the first heat dissipation member 370 may be disposed between the first waterproof member 361 disposed on the first housing 310, and the second waterproof member 362 disposed on the second housing 320. For example, the first heat dissipation member 370 may extend, across the hinge structure 340, between the first waterproof member 361 and the second waterproof member 362. According to an embodiment, the first heat dissipation member 370 may include a first region 371, a second region 372, and/or a third region 373.

The first region 371 may be disposed on the first hinge plate 343. For example, the first region 371 may be interposed between the first reinforcing member 351 and the surface 343a of the first hinge plate 343. According to an embodiment, the first region 371 may overlap the first hinge plate 343 when the display 330 is viewed from above (e.g., +z direction). For example, when the display 330 is viewed from above, the first region 371 may overlap the surface 343a of the first hinge plate 343. According to an embodiment, when a state of the electronic device 300 is changed, the first region 371 may move together with the first hinge plate 343. For example, when the first hinge plate 343 moves, the first region 371 may maintain a shape parallel to the surface 343a of the first hinge plate 343. For example, the shape of the first region 371 may not be deformed by movement of the first hinge plate 343.

The second region 372 may be disposed on the second hinge plate 344. For example, the second region 372 may be interposed between the second reinforcing member 352 and the surface 344a of the second hinge plate 344. According to an embodiment, the second region 372 may overlap the second hinge plate 344 when the display 330 is viewed from above (e.g., +z direction). For example, when the display 330 is viewed from above, the second region 372 may overlap the surface 344a of the second hinge plate 344. According to an embodiment, when the state of the electronic device 300 is changed, the second region 372 may move together with the second hinge plate 344. For example, when the second hinge plate 344 moves, the second region 372 may maintain a shape parallel to the surface 344a of the second hinge plate 344. For example, the shape of the second region 372 may not be deformed by the movement of the second hinge plate 344.

The third region 373 may connect the first region 371 and the second region 372. The second region 373 may be disposed between the first region 371 and the second region 372. According to an embodiment, in the unfolded state of the electronic device 300, the third region 373 may pass through a gap between the side surface 343c of the first hinge plate 343 and the side surface 344c of the second hinge plate 344, which face each other. For example, in the unfolded state of the electronic device 300, at least a portion of the third region 373 may be disposed within the internal space 345 of the hinge structure 340 by passing through the gap between the side surface 343c of the first hinge plate 343 and the side surface 344c of the second hinge plate 344. For example, in the unfolded state of the electronic device 300, the at least a portion of the third region 373 may face the flexible printed circuit board 301 disposed within the internal space 345 of the hinge structure 340. For example, in the unfolded state of the electronic device 300, the at least a portion of the third region 373 may be in contact with the flexible printed circuit board 301. For example, in the unfolded state of the electronic device 300, the at least a portion of the third region 373 may be spaced apart from the flexible printed circuit board 301. According to an embodiment, the third region 373 may be deformable, as the state of the electronic device 300 changes. For example, the third region 373 may be foldable by the movement of the first hinge plate 343 and the second hinge plate 344. According to an embodiment, the third region 373 may be curved in the unfolded state of the electronic device 300. For example, in the unfolded state of the electronic device 300, the at least a portion of the third region 373 may be curved between the side surface 343c of the first hinge plate 343 and the side surface 344c of the second hinge plate 344. The at least a portion of the third region 373 may be curved within the intemal space 345 of the hinge structure 340 in the unfolded state of the electronic device 300. The third region 373 may be unfolded, as the state of the electronic device 300 changes from the unfolded state to the folded state. For example, the third region 373 may have a linearly extended shape in the folded state of the electronic device 300. According to an embodiment, the third region 373 may be folded, as the state of the electronic device 300 changes from the folded state to the unfolded state. For example, as the state of the electronic device 300 changes from the unfolded state to the folded state, a distance between the surface 343a of the first hinge plate 343 and the surface 344a of the second hinge plate 344 may increase. When the distance between the surface 343a of the first hinge plate 343 and the surface 344a of the second hinge plate 344 increases, since a distance between the first region 371 and the second region 372 increases, stress may be applied to the third region 373. When the third region 373 is not deformable, the third region 373 may be damaged by the stress generated by repetition of the change in the state of the electronic device 300. According to an embodiment, the electronic device 300 may provide a structure capable of reducing damage to the first heat dissipation member 370 generated by the repetition of the change in the state of the electronic device 300 by the deformable third region 373.

According to an embodiment, in the unfolded state of the electronic device 300, a distance between the first reinforcing member 351 and the second reinforcing member 352 is shorter than a distance between the first hinge plate 343 and the second hinge plate 344. For example, in case that the first heat dissipation member 370 is disposed between the plurality of reinforcing members 350 and the display 330, in the unfolded state of the electronic device 300, the third region 373 of the first heat dissipation member 370 may pass through a gap between the first reinforcing member 351 and the second reinforcing member 352. In case that the third region 373 passes through between the first reinforcing member 351 and the second reinforcing member 352, a size of the gap between the first reinforcing member 351 and the second reinforcing member 352 may be greater than or equal to a size of the third region 373. For example, in case that the heat dissipation member 370 is disposed between the plurality of reinforcing members 350 and the display 330, in the unfolded state of the electronic device 300, the size of the gap between the first reinforcing member 351 and the second reinforcing member 352 may be greater than or equal to a thickness of the third region 373 disposed between the first hinge plate 343 and the second hinge plate 343. As the size of the gap between the first reinforcing member 351 and the second reinforcing member 352 increases, a region of the display 330 corresponding to the gap between the first reinforcing member 351 and the second reinforcing member 352 may be vulnerable to impact applied from the outside of the electronic device 300. According to an embodiment, the electronic device 300 may provide the structure capable of reducing the damage to the display 330 due to the impact by the first heat dissipation member 370 disposed under the plurality of reinforcing members 350. For example, since the first heat dissipation member 370 is disposed under the plurality of reinforcing members 350, the distance between the first reinforcing member 351 and the second reinforcing member 352 may be reduced than a case that the first heat dissipation member 370 is disposed between the display 330 and the plurality of reinforcing members 350. As the distance between the first reinforcing member 351 and the second reinforcing member 352 is reduced, the display 330 may have a structure that is robust against external impact.

According to an embodiment, in the folded state of the electronic device 300, the third region 373 of the first heat dissipation member 370 may be spaced apart from the first reinforcing member 351 and the second reinforcing member 352. For example, in the folded state of the electronic device 300, the third region 373 may be spaced apart from the first reinforcing member 351 and the second reinforcing member 352, and face the first reinforcing member 351 and the second reinforcing member 352. For example, in the folded state of the electronic device 300, in case that the third region 373 is in contact with the first reinforcing member 351 and the second reinforcing member 352, the third region 373 may be damaged by the first reinforcing member 351 and the second reinforcing member 352. According to an embodiment, since the third region 373 is spaced apart from the first reinforcing member 351 and the second reinforcing member 352, the electronic device 300 may provide the structure capable of reducing damage to the first heat dissipation member 370 generated as the change in the state of the electronic device 300 is repeated. According to an embodiment, in the folded state of the electronic device 300, at least a portion of the third region 373 may face the flexible printed circuit board 301. For example, in the folded state of the electronic device 300, the at least a portion of the third region 373 may be in contact with the flexible printed circuit board 301. For example, in the folded state of the electronic device 300, the at least a portion of the third region 373 may be spaced apart from the flexible printed circuit board 301. According to an embodiment, the thickness of the first heat dissipation member 370 may be less than or equal to the thickness of each of the plurality of waterproof member 361. For example, the thickness of the first heat dissipation member 370 may be less than or equal to the thickness of each of the first waterproof member 361 and the second waterproof member 362. According to an embodiment, the thickness of the first region 371 may be less than or equal to the thickness of the first waterproof member 361. For example, the thickness of the first region 371 may correspond to the thickness of the first waterproof member 361. For example, the thickness of the first region 371 may be thinner than the thickness of the first waterproof member 361. According to an embodiment, the thickness of the second region 372 may be less than or equal to the thickness of the second waterproof member 362. For example, the thickness of the second region 372 may correspond to the thickness of the second waterproof member 362. For example, the thickness of the second region 372 may be thinner than the thickness of the second waterproof member 362. According to an embodiment, the thickness of the third region 373 may correspond to the thickness of the first region 371 and the thickness of the second region 372, but is not limited thereto. For example, the thickness of the third region 373 may be thinner than the thickness of each of the first region 371, and the second region 372. For example, in case that the thickness of the first heat dissipation member 370 is thicker than each thickness of the plurality of waterproof members 360, the thickness of the electronic device 300 may be increased by the thickness of the first heat dissipation member 370. According to an embodiment, the electronic device 300 may provide a structure capable of reducing an increase in the thickness of the electronic device 300 due to the first heat dissipation member 370, by the first heat dissipation member 370 having the thickness less than or equal to the thickness of each of the plurality of waterproof members 360.

The plurality of adhesive members 380 may attach the first heat dissipation member 370 to the first hinge plate 343 and the second hinge plate 344. For example, the plurality of adhesive members 380 may include an adhesive material for coupling the first heat dissipation member 370, the first hinge plate 343, and the second hinge plate 344. For example, the plurality of adhesive members 380 may include a pressure sensitive adhesive (PSA), but are not limited to it. According to an embodiment, the plurality of adhesive members 380 may include a first adhesive member 381 and a second adhesive member 382. The first adhesive member 381 may couple the first region 371 and the first hinge plate 343. According to an embodiment, the first adhesive member 381 may be disposed between the surface 343a of the first hinge plate 343 and the first region 371. For example, the first adhesive member 381 may be in contact with the surface 343a of the first hinge plate 343 and the first region 371. The second adhesive member 382 may couple the second region 372 to the second hinge plate 344. According to an embodiment, the second adhesive member 382 may be disposed between the surface 344a of the second hinge plate 344 and the second region 372. For example, the second adhesive member 382 may be in contact with the surface 344a of the second hinge plate 344 and the second region 372.

According to an embodiment, in the unfolded state of the electronic device 300, the side surface 343c of the first hinge plate 343 and the side surface 344c of the second hinge plate 344 may be spaced apart from the plurality of adhesive members 380. For example, a location of an end 381a of the first adhesive member 381 may correspond to a location of an end of the surface 343a of the first hinge plate 343. For example, the first adhesive member 381 may be in contact with only the surface 343a of the first hinge plate 343, and may not be in contact with the side surface 343c of the first hinge plate 343. For example, a location of an end 382a of the second adhesive member 382 may correspond to a location of an end of the surface 344a of the second hinge plate 344. For example, the second adhesive member 382 may be in contact with only the surface 344a of the second hinge plate 344, and may not be in contact with the side surface 344c of the second hinge plate 344. In case that in the unfolded state of the electronic device 300, the plurality of adhesive members 380 is in contact with the side surface 343c of the first hinge plate 343 and the side surface 344c of the second hinge plate 344, the plurality of adhesive members 380 may contact or be separated from the third region 373 while the change in the state of the electronic device 300 is repeated. As the contact and the separation between the plurality of adhesive members 380 and the third region 373 are repeated, noise may be generated from the third region 373. According to an embodiment, in the unfolded state of the electronic device 300, the electronic device 300 may provide a structure capable of reducing noise that may be generated by the change in the state of the electronic device 300, since the side surface 343c of the first hinge plate 343 and the side surface 344c of the second hinge plate 344 are spaced apart from the plurality of adhesive members 380.

As described above, according to an embodiment, the electronic device 300 may provide the structure capable of dissipating heat in the first housing 310 and the second housing 320 while reducing damage to the display 330 due to the external impact, by the first heat dissipation member 370 disposed under the plurality of reinforcing members 350.

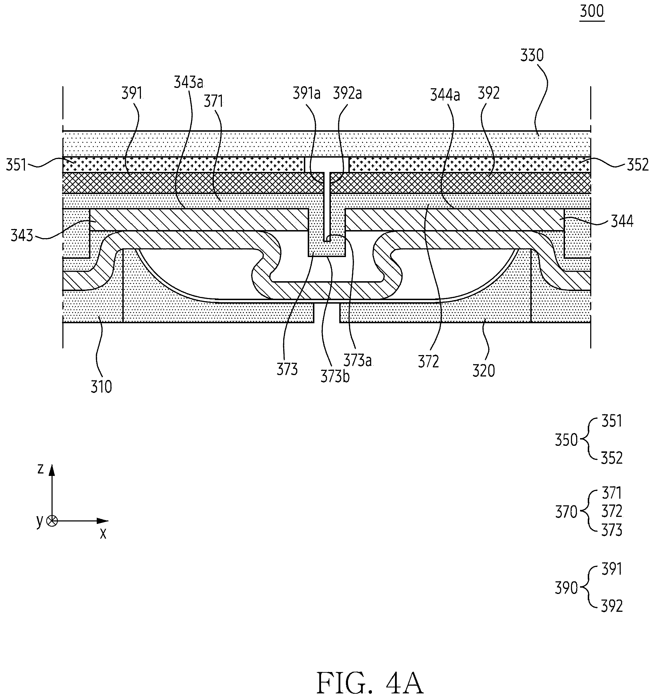

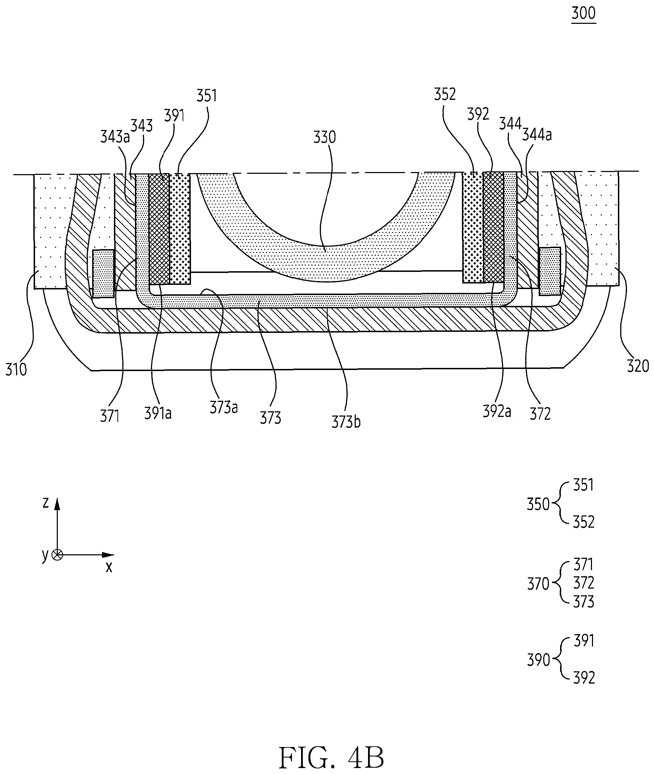

FIG. 4A is a cross-sectional view illustrating an example cut along an exemplary electronic device in an unfolded state, and FIG. 4B is a cross-sectional view illustrating an example cut along an exemplary electronic device in a folded state.

Referring to FIGS. 4A and 4B, according to an embodiment, the electronic device 300 may further include a plurality of second heat dissipation members 390. The plurality of second heat dissipation members 390 may transmit heat generated in a first housing 310 to a first heat dissipation member 370. The plurality of second heat dissipation members 390 may transmit heat generated in a second housing 320 to the first heat dissipation member 370. According to an embodiment, the plurality of second heat dissipation members 390 may be disposed between the first heat dissipation member 370 and a plurality of reinforcing member 350. For example, each of the plurality of second heat dissipation members 390 may include graphite, but is not limited thereto. According to an embodiment, the plurality of second heat dissipation members 390 disposed on the first heat dissipation member 370 may increase heat exchange efficiency in the first housing 310 and the second housing 320. As a size of a path through which the heat generated in the electronic device 300 can move is substantially expanded by the plurality of second heat dissipation members 390 disposed on the first heat dissipation member 370, the heat exchange efficiency in the first housing 310 and the second housing 320 may be increased. According to an embodiment, the plurality of second heat dissipation members 390 may include a second heat dissipation member 391 and a third heat dissipation member 392.

The second heat dissipation member 391 may be disposed on a surface 343a of a first hinge plate 343. According to an embodiment, the second heat dissipation member 391 may be disposed between a first region 371 and a first reinforcing member 351. When a first hinge plate 340 moves, the second heat dissipation member 391 may move together with the first hinge plate 343. For example, when the first hinge plate 343 moves, the second heat dissipation member 391 may maintain a shape parallel to the first region 371. For example, the shape of the second heat dissipation member 391 may not be deformed by movement of the first hinge plate 343.

The third heat dissipation member 392 may be disposed on a surface 344a of a second hinge plate 344. According to an embodiment, the third heat dissipation member 392 may be disposed between a second region 372 and a second reinforcing member 352. When a second hinge plate 344 moves, the third heat dissipation member 392 may move together with the second hinge plate 344. For example, when the second hinge plate 344 moves, the third heat dissipation member 392 may maintain a shape parallel to the second region 372. For example, the shape of the third heat dissipation member 392 may not be deformed by movement of the second hinge plate 344. The third heat dissipation member 392 may be spaced apart from the second heat dissipation member 391. For example, a third region 373 of the first heat dissipation member 370 may be disposed between the third heat dissipation member 392 and the second heat dissipation member 391.

According to an embodiment, the second heat dissipation member 391 and the third heat dissipation member 392 may not be disposed on the third region 373 of the first heat dissipation member 370. For example, when the third region 373 is folded, a compressive force may be applied on a surface 373a of the third region 373, and a tensile force may be applied on another surface 373b of the third region 373 opposite to the surface 373a of the third region 373. Since a difference between the compressive force applied to the surface 373a of the third region 373 and the tensile force applied to the other surface 373b of the third region 373 increases as a thickness of the third region 373 increases, a possibility of damage to the third region 373 may be increased, as the thickness of the third region 373 increases. According to an embodiment, the electronic device 300 may provide a structure capable of heat exchanging between the first housing 310 and the second housing 320 while reducing the damage to the first heat dissipation member 370 by the second heat dissipation member 391 disposed on the first region 371 and the third heat dissipation member 392 disposed on the second region 372. For example, since the second heat dissipation member 391 and the third heat dissipation member 392 are not disposed in the third region 373, the third region 373 that is vulnerable to the damage may have a relatively thin thickness.

According to an embodiment, in the unfolded state of the electronic device 300, a side surface 391a of the second heat dissipation member 391 and a side surface 392a of the third heat dissipation member 392 may face each other. For example, in the unfolded state of the electronic device 300, a direction (e.g., +x direction) in which the side surface 391a of the second heat dissipation member 391 faces may be opposite to a direction (e.g., -x direction) in which the side surface 392a of the third heat dissipation member 392. According to an embodiment, in the folded state of the electronic device 300, the second heat dissipation member 391 and the third heat dissipation member 392 may be substantially perpendicular to the third region 373.

As described above, according to an embodiment, the electronic device 300 may provide the structure capable of the heat exchange between the first housing 310 and the second housing 320 while a life of the first heat dissipation member 370 is increased by the second heat dissipation member 391 disposed on the first region 371 and the third heat dissipation member 392 disposed on the second region 372.

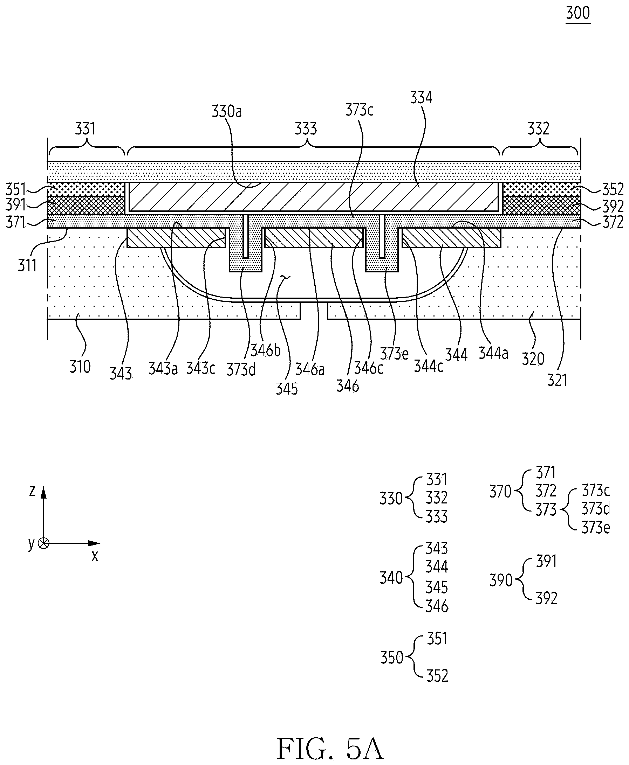

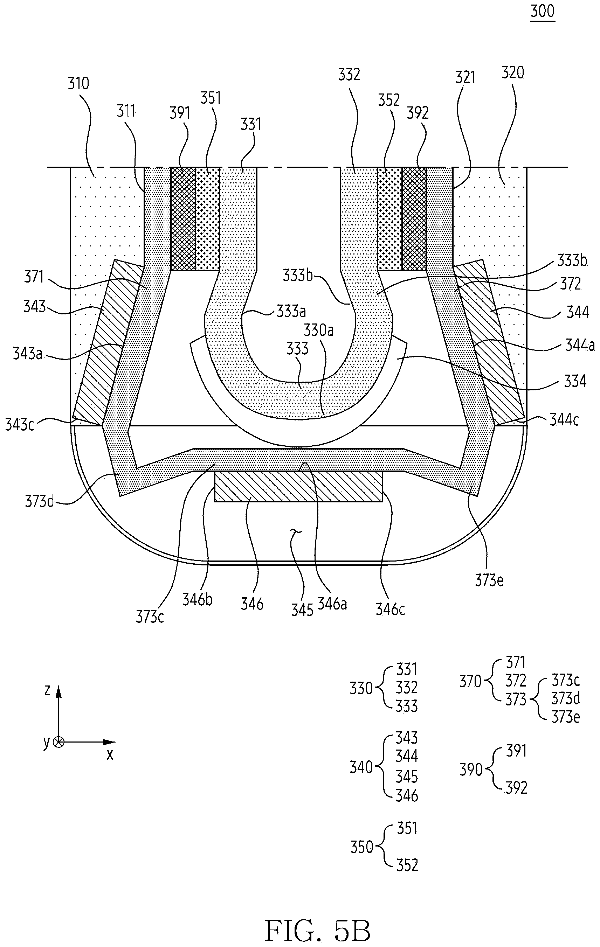

FIG. 5A is a cross-sectional view illustrating an example cut along an exemplary electronic device in an unfolded state, and FIG. 5B is a cross-sectional view illustrating an example cut along an exemplary electronic device in a folded state.

Since an electronic device 300 of FIGS. 5A and 5B may be an electronic device 300 in which a structure of a hinge structure 340 has been changed in FIGS. 3A, 3B, and 3C, a redundant description is omitted.

Referring to FIGS. 5A and 5B, according to an embodiment, a display 330 may include a first display region 331 (e.g., the first display region 231 of FIG. 2A), a second display region 332 (e.g., the second display region 232 of FIG. 2A), and a third display region 333 (e.g., the third display region 233 of FIG. 2A). The first display region 331 may be disposed on a first housing 310. For example, the first display region 331 may be disposed on a first surface 311 of the first housing 310. The second display region 332 may be disposed on a second housing 320. The second display region 332 may be spaced apart from the first display region 331. For example, the second display region 332 may be disposed on a third surface 321 of the second housing 310. The third display region 333 may be disposed between the first display region 331 and the second display region 332. For example, the third display region 333 may be disposed on the hinge structure 340.

According to an embodiment, a rotation angle range of the first housing 310 rotatable with respect to the second housing 320 may be smaller than a rotation angle range of a first hinge plate 343 rotatable with respect to a hinge bracket (e.g., the hinge bracket 342 of FIG. 3A). A rotation angle range of the second housing 320 rotatable with respect to the first housing 310 may be smaller than a rotation angle range of a second hinge plate 344 rotatable with respect to the hinge bracket 342. For example, while a state of the electronic device 300 changes from the unfolded state to the folded state, the first housing 310 and the second housing 320 may rotate 90 degrees, respectively and the first hinge plate 343 and the second hinge plate 344 may rotate 100 degrees, respectively. According to an embodiment, since the rotation angle range of the first hinge plate 343 and the first housing 310 is different, the electronic device 300 may provide a structure in which a change in curvature of at least a portion of the third display region 330 is gentle. For example, in case that the first hinge plate 343 faces the second hinge plate 344 in the folded state of the electronic device 300, the curvature of the third display region 333 may change rapidly between the first hinge plate 343 and the second hinge plate 344. According to an embodiment, since the first hinge plate 343 is inclined with respect to the second hinge plate 344 in the unfolded state of the electronic device 300, the electronic device 300 provide the structure in which the change in the curvature of the third display region 333 is gentle. According to an embodiment, the electronic device 300 may provide a structure reducing formation of a wrinkle on the display 330, since the curvature of the third display region 333 gently changes.

According to an embodiment, in the folded state of the electronic device 300, a surface 343a of the first hinge plate 343 may be inclined with respect to the first surface 311 of the first housing 310. In the folded state of the electronic device 300, a surface 344a of the second hinge plate 344 may be inclined with respect to the third surface 321 of the second housing 320. According to an embodiment, in the folded state of the electronic device 300, the surface 343a of the first hinge plate 343 may be inclined with respect to the surface 344a of the second hinge plate 344. As the surface 343a of the first hinge plate 343 is inclined with respect to the first surface 311, the first display region 331 disposed on the first surface 311 may be inclined with respect to a portion 333a of the third display region 333 disposed on the surface 343a of the first hinge plate 343. As the surface 344a of the second hinge plate 344 is inclined with respect to the third surface 321, the second display region 331 disposed on the third surface 321 may be inclined with respect to another portion 333b of the third display region 333 disposed on the surface 344a of the second hinge plate 344.

According to an embodiment, the hinge structure 340 may include a third hinge plate 346. The third hinge plate 346 may support the display 330. For example, the third hinge plate 346 may support the third display region 333 of the display 330 disposed on the third hinge plate 346. According to an embodiment, the third hinge plate 346 may be coupled to a hinge bracket (e.g., the hinge bracket 342 of FIG. 3A). For example, the third hinge plate 346 may be fixed to the hinge bracket 342. As the third hinge plate 346 is fixed to the hinge bracket 342, the third hinge plate 346 may not move when the first hinge plate 343 and the second hinge plate 344 move. According to an embodiment, the third hinge plate 346 may be disposed between the first hinge plate 343 and the second hinge plate 344. According to an embodiment, the third region 373 of a first heat dissipation member 370 may include a fixed portion 373c, a first extending portion 373d, and a second extending portion 373e.

The fixed portion 373c may be disposed on the third hinge plate 346. For example, the fixed portion 373c may be disposed on a surface 346a of the third hinge plate 346. According to an embodiment, the fixed portion 373c may be fixed on the third hinge plate 346. For example, the fixed portion 373c may be fixed on the surface 346a of the third hinge plate 346. According to an embodiment, the fixed portion 373c may be spaced apart from the first region 371 and the second region 372.

The first extending portion 373d may be disposed between the first hinge plate 343 and the third hinge plate 346. For example, the first extending portion 373d may connect the first region 371 to the fixed portion 373c. According to an embodiment, the first extending portion 373d that, in the unfolded state of the electronic device 300, is disposed within a gap between a side surface 343c of the first hinge plate 343 and a first side surface 346b of the third hinge plate 346 facing the side surface 343c of the first hinge plate 343. For example, in the unfolded state of the electronic device 300, the first extending portion 373d may pass through the gap between the side surface 343c of the first hinge plate 343 and the first side surface 346b of the third hinge plate 346. For example, in the unfolded state of the electronic device 300, at least a portion of the first extending portion 373d may be disposed within an intemal space 345 of the hinge structure 340. According to an embodiment, the at least a portion of the first extending portion 373d may be deformable by movement of the first hinge plate 343 and the second hinge plate 344. In the unfolded state of the electronic device 300, the at least a portion of the first extending portion 373d may be curved between the side surface 343c of the first hinge plate 343 and the first side surface 346b of the third hinge plate 346. The first extending portion 373d may be unfolded, as a state of the electronic device 300 changes from the unfolded state to the folded state. The first extending portion 373d may be folded, as the state of the electronic device 300 changes from the folded state to the unfolded state.

The second extending portion 373e may be disposed between the second hinge plate 344 and the third hinge plate 346. For example, the second extending portion 373e may connect the second region 372 to the fixed portion 373c. According to an embodiment, the second extending portion 373e that, in the unfolded state of the electronic device 300, is disposed within a gap between a side surface 344c of the second hinge plate 344 and a second side surface 346c of the third hinge plate 346 facing the side surface 344c of the second hinge plate 344. For example, in the unfolded state of the electronic device 300, the second extending portion 373e may pass through the gap between the side surface 343c of the second hinge plate 344 and the second side surface 346c of the third hinge plate 346. For example, in the unfolded state of the electronic device 300, at least a portion of the second extending portion 373e may be disposed within the intemal space 345 of the hinge structure 340. According to an embodiment, the at least a portion of the second extending portion 373e may be deformable by the second hinge plate 344 and movement of the second hinge plate 344. In the unfolded state of the electronic device 300, the at least a portion of the second extending portion 373e may be curved between the side surface 344c of the second hinge plate 344 and the second side surface 346c of the third hinge plate 346. The second extending portion 373e may be unfolded, as the state of the electronic device 300 changes from the unfolded state to the folded state. The second extending portion 373e may be folded, as the state of the electronic device 300 changes from the folded state to the unfolded state.

According to an embodiment, the electronic device 300 may include a cushioning member 334. The cushioning member 334 may cushion impact transmitted from the third hinge plate 346 to the display 330. The cushioning member 334 may have flexibility. For example, the cushioning member 334 may include thermoplastic polyurethane (TPU), but is not limited to it. According to an embodiment, the cushioning member 334 may be disposed on the third region 333 of the display 330. For example, the cushioning member 334 may be attached to an intemal surface 330a of the display 330. According to an embodiment, the cushioning member 334 may be disposed between a first reinforcing member 351 and a second reinforcing member 352. For example, the cushioning member 334 may face the first heat dissipation member 370. According to an embodiment, the cushioning member 334 may be disposed between a plurality of second heat dissipation members 390 spaced apart from each other. For example, the cushioning member 334 may be disposed between the second heat dissipation member 391 disposed between the first reinforcing member 351 and the first region 371, and the third heat dissipation member 392 disposed between the second reinforcing member 352 and the second region 372. According to an embodiment, the cushioning member 334 may be deformable by movement of the first hinge plate 343 and the second hinge plate 344 for folding the display 330. For example, it may be parallel to the third hinge plate 346 in the unfolded state of the electronic device 300. As the state of the electronic device 300 changes from the unfolded state to the folded state, the cushioning member 334 may be curved with the curvature to correspond to a shape of the third region 333 of the display 330.

As described above, according to an embodiment, the electronic device 300 may provide the structure capable of reducing the damage to the first heat dissipation member 370 generated by the repetition of the change in the state of the electronic device 300, by the first extending portion 373d and the second extending portion 373e, deformable by the movement of the first hinge plate 343 and the second hinge plate 344 for folding the display 330.

An electronic device may include housings rotatable with respect to each other. Electronic components may be disposed inside each of the housings. Since the housings are separated from each other, heat generated from the electronic components in a housing may not be transmitted to another housing and may be concentrated in the housing. In case that the heat is concentrated in the housing, performance of the electronic components may deteriorate or a life of the electronic components may be reduced. The electronic device may need a structure capable of dissipating the heat generated in the housing to the other housing.

According to an embodiment, an electronic device (e.g., the electronic device 300 of FIG. 3A, FIG. 3B, and FIG. 3C) may comprise a hinge structure (e.g., the hinge structure 340 of FIG. 3A, FIG. 3B, and FIG. 3C) including a first hinge plate (e.g., the first hinge plate 343 of FIG. 3A, FIG. 3B, and FIG. 3C), and a second hinge plate (e.g., the second hinge plate 344 of FIG. 3A, FIG. 3B, and FIG. 3C) distinct from the first hinge plate, and a hinge bracket (e.g., the hinge bracket 342 of FIG. 3A) rotatably coupling the first hinge plate and the second hinge plate. According to an embodiment, the electronic device may comprise a display (e.g., the display 330 of FIG. 3A, FIG. 3B, and FIG. 3C) disposed over the first hinge plate and the second hinge plate across the hinge structure. According to an embodiment, the electronic device may comprise a plurality of reinforcing members (e.g., the plurality of reinforcing members 350 of FIG. 3B and FIG. 3C), attached to the display, including a first reinforcing member (e.g., the first reinforcing member 351 of FIG. 3B and FIG. 3C), facing a surface (e.g., the surface 343a of FIG. 3B and FIG. 3C) of the first hinge plate and spaced apart from the first hinge plate, and a second reinforcing member (e.g., the second reinforcing member 352 of FIG. 3B and FIG. 3C) facing a surface (e.g., the surface 344a of FIG. 3B and FIG. 3C) of the second hinge plate and spaced apart from the second hinge plate. According to an embodiment, the electronic device may comprise a first heat dissipation member (e.g., the first heat dissipation member 370 of FIG. 3B and FIG. 3C) including a first region (e.g., the first region 371 of FIG. 3B and FIG. 3C) disposed between the first reinforcing member and the surface of the first hinge plate, a second region (e.g., the second region 372 of FIG. 3B and FIG. 3C) disposed between the second reinforcing member and the surface of the second hinge plate, and a third region (e.g., the third region 373 of FIG. 3B and FIG. 3C) connecting the first region and the second region and being deformable by movement of the first hinge plate and the second hinge plate. According to an embodiment, in an unfolded state of the electronic device in which a direction in which the surface of the first hinge plate faces corresponds to a direction in which the surface of the second hinge plate faces, at least a portion of the third region may be disposed within a gap between a side surface (e.g., the side surface 343c of FIG. 3B and FIG. 3C) of the first hinge plate and a side surface (e.g., the side surface 344 of FIG. 3B and FIG. 3C) of the second hinge plate, which face each other.

According to an embodiment, the electronic device may provide a structure capable of dissipating heat in a first housing and a second housing while reducing damage to the display due to external impact by the first heat dissipation member disposed under the plurality of reinforcing members.

According to an embodiment, in the unfolded state, a size of a gap between the first reinforcing member and the second reinforcing member may be smaller than a size of a gap between the first hinge plate and the second hinge plate.

According to an embodiment, an electronic device may provide a structure capable of reducing damage to the display due to the external impact, since the size of the gap between the first reinforcing member and the second reinforcing member is minimized.

According to an embodiment, the electronic device may comprise a first housing (e.g., the first housing 310 of FIG. 3A, FIG. 3B, and FIG. 3C) supporting a portion of the display. According to an embodiment, the electronic device may comprise a second housing (e.g., the second housing 320 of FIG. 3A, FIG. 3B, and FIG. 3C) supporting another portion of the display, coupled to the first housing so as to be rotatable with respect to the first housing through the hinge structure. According to an embodiment, the electronic device may comprise a first waterproof member (e.g., the first waterproof member 361 of FIG. 3B and FIG. 3C) disposed between the first housing and the first reinforcing member. According to an embodiment, the electronic device may comprise a second waterproof member (e.g., the second waterproof member 362 of FIG. 3B and FIG. 3C), disposed between the second housing and the second reinforcing member, spaced apart from the first waterproof member. According to an embodiment, the first heat dissipation member may be disposed between the first waterproof member and the second waterproof member.

Since the first heat dissipation member is disposed between the first waterproof member and the second waterproof member, the electronic device according to an embodiment may provide a structure capable of reducing an increase in a thickness of an electronic device due to the first heat dissipation member.

According to an embodiment, a thickness of the first heat dissipation member may be less than or equal to a thickness of each of the first waterproof member and the second waterproof member.

According to an embodiment, the electronic device may provide the structure capable of reducing the increase in the thickness of the electronic device due to the first heat dissipation member 370, by the first heat dissipation member having the thickness less than or equal to the thickness of each of the plurality of waterproof members.

According to an embodiment, in a folded state of the electronic device in which the surface of the first hinge plate faces the surface of the second hinge plate, the third region may be spaced apart from the first reinforcing member and the second reinforcing member.

According to an embodiment, the electronic device may provide a structure capable of reducing damage to the first heat dissipation member due to the plurality of reinforcing members, since the first heat dissipation member is spaced apart from the first reinforcing member and the second reinforcing member

According to an embodiment, in the unfolded state, the at least a portion of the third region may be disposed within an intemal space (e.g., the intemal space 345 of FIG. 3B and FIG. 3C) of the hinge structure, disposed on another surface (e.g., the other surface 343b of FIG. 3B and FIG. 3C) of the first hinge plate opposite to the surface of the first hinge plate and another surface (e.g., the other surface 344b of FIG. 3B and FIG. 3C) of the second hinge plate opposite to the surface of the second hinge plate.

According to an embodiment, an electronic device may provide a structure capable of reducing damage to the first heat dissipation member due to repetition of a change in a state of the electronic device, since the third region of the first heat dissipation member is deformable.

According to an embodiment, the third region may be unfolded as a state of the electronic device changes from the unfolded state to a folded state of the electronic device in which the surface of the first hinge plate faces the surface of the second hinge plate, and folded as the state of the electronic device changes from the folded state to the unfolded state.

According to an embodiment, the electronic device may provide the structure capable of reducing the damage to the first heat dissipation member due to the repetition of the change in the state of the electronic device, since the third region of the first heat dissipation member is deformable.

According to an embodiment, the electronic device may comprise a first housing (e.g., the first housing 310 of FIG. 3A, FIG. 3B, and FIG. 3C) supporting a portion of the display. According to an embodiment, the electronic device may comprise a second housing (e.g., the second housing 320 of FIG. 3A, FIG. 3B, and FIG. 3C), supporting another portion of the display, coupled to the first housing so as to be rotatable with respect to the first housing through the hinge structure. According to an embodiment, the electronic device may comprise a flexible printed circuit board (e.g., the flexible printed circuit board 301 of FIG. 3B and FIG. 3C) extending from the first housing to the second housing across the internal space of the hinge structure. According to an embodiment, at least a portion of the third region may be spaced apart from the flexible printed circuit board in the intemal space of the hinge structure.

According to an embodiment, the electronic device may provide a structure capable of minimizing interference between the flexible printed circuit board and the first heat dissipation member, since the third region and the flexible printed circuit board are spaced apart from each other.

According to an embodiment, the electronic device may comprise a first adhesive member (e.g., the first adhesive member 381 of FIG. 3B and FIG. 3C) disposed between the surface of the first hinge plate and the first region. According to an embodiment, the electronic device may comprise a second adhesive member (e.g., a second adhesive member 382 of FIG. 3B and FIG. 3C) disposed between the surface of the second hinge plate and the second region.

According to an embodiment, the electronic device may provide a structure in which the first region and the second region of the first heat dissipation member are attached on the first hinge plate and the second hinge plate, respectively, through the first adhesive member and the second adhesive member.

According to an embodiment, a location of an end (e.g., the end 381a of FIG. 3B) of the first adhesive member may correspond to a location of an end of the surface of the first hinge plate.

According to an embodiment, the electronic device may provide a structure capable of reducing generation of noise due to the first adhesive member, since the first adhesive member is attached only on the surface of the first hinge plate.

According to an embodiment, the electronic device may comprise a second heat dissipation member (e.g., the second heat dissipation member 391 of FIG. 4A and FIG. 4B) disposed between the first region and the first reinforcing member. According to an embodiment, the electronic device may comprise a third heat dissipation member (e.g., the third heat dissipation member 392 of FIG. 4A and FIG. 4B), disposed between the second region and the second reinforcing member, spaced apart from the second reinforcing member.

According to an embodiment, the electronic device may provide a structure capable of increasing heat exchange efficiency between the first housing and the second housing by the second heat dissipation member and the third heat dissipation member.

According to an embodiment, a side surface (e.g., the side surface 392a of FIG. 4A and FIG. 4B) of the third heat dissipation member and a side surface (e.g., the side surface 391a of FIG. 4A and FIG. 4B) of the second heat dissipation member may face each other in the unfolded state, and may face the third region in a folded state of the electronic device in which the surface of the first hinge plate faces the surface of the second hinge plate.

According to an embodiment, the electronic device may provide the structure capable of increasing the heat exchange efficiency between the first housing and the second housing by the second heat dissipation member and the third heat dissipation member.

According to an embodiment, the hinge structure may include a third hinge plate (e.g., the third hinge plate 346 of FIG. 5A and FIG. 5B), disposed between the first hinge plate and the second hinge plate, fixed to the hinge bracket, and supporting the display. According to an embodiment, the third region may include a fixed portion (e.g., the fixed portion 371c of FIG. 5A and FIG. 5B) fixed on the third hinge plate. According to an embodiment, the third region may include a first extending portion (e.g., a first extending portion 371d of FIG. 5A and FIG. 5B) that, in the unfolded state, is disposed within a gap between the side surface of the first hinge plate and a first side surface of the third hinge plate facing the side surface of the first hinge plate. According to an embodiment, the third region may include a second extending portion (e.g., the second extending portion 371e of FIG. 5A and FIG. 5B) that, in the unfolded state, is disposed within a gap between the side surface of the second hinge plate and a second side surface of the third hinge plate facing the side surface of the second hinge plate.

According to an embodiment, the electronic device may provide the structure capable of reducing the damage to the first heat dissipation member generated by the repetition of the change in the state of the electronic device 300, by the first extending portion and the second extending portion deformable by movement of the first hinge plate and the second hinge plate for folding the display.

According to an embodiment, the electronic device may comprise a cushioning member (e.g., the cushioning member 334 of FIG. 5A and FIG. 5B) attached, between the first reinforcing member and the second reinforcing member, to a surface of the display. According to an embodiment, the cushioning member may be deformable by movement of the first hinge plate and the second hinge plate to fold the display

According to an embodiment, the electronic device, may provide a structure capable of reducing damage to the display due to the third hinge plate by the cushioning member disposed on an intemal surface of the display.

According to an embodiment, the electronic device may comprise a first housing supporting a portion of the display. According to an embodiment, the electronic device may comprise a second housing, supporting another portion of the display, coupled to the first housing so as to be rotatable with respect to the first housing through the hinge structure. According to an embodiment, a rotation angle range of the second housing, which is rotatable with respect to the first housing may be smaller than a rotation angle range of the second hinge plate, which is rotatable with respect to the hinge bracket.

Since the rotation angle range of the second hinge plate and the second housing is different, according to an embodiment, the electronic device may provide a structure in which a change in curvature of the display is gentle in the folded state of the electronic device.

According to an embodiment, an electronic device (e.g., the electronic device 300 of FIG. 3A, FIG. 3B, and FIG. 3C) may comprise a first housing (e.g., the first housing 310 of FIG. 3A, FIG. 3B, and FIG. 3C). According to an embodiment, the electronic device may comprise a second housing (e.g., the second housing 320 of FIG. 3A, FIG. 3B, and FIG. 3C) rotatable with respect to the first housing. The electronic device may comprise a hinge structure (e.g., the hinge structure 340 of FIG. 3A, FIG. 3B, and FIG. 3C), rotatably coupling the first housing and the second housing, including a first hinge plate (e.g., the first hinge plate 343 of FIG. 3A, FIG. 3B, and FIG. 3C), a second hinge plate (e.g., the second hinge plate 344 of FIG. 3A, FIG. 3B, and FIG. 3C) distinct from the first hinge plate and a hinge bracket (e.g., the hinge bracket 342 of FIG. 3A) rotatably coupling the first housing and the second housing. According to an embodiment, the electronic device may comprise a display (e.g., the display 330 of FIG. 3A, FIG. 3B, and FIG. 3C) disposed on the first housing and the second housing across the hinge structure. According to an embodiment, the electronic device may comprise a plurality of waterproof members (e.g., the plurality of waterproof members 360 of FIG. 3B and FIG. 3C), separating the display from the first hinge plate and the second hinge plate, including a first waterproof member (e.g., the first waterproof member 361 of FIG. 3B and FIG. 3C) disposed between the display and the first housing and a second waterproof member (e.g., the second waterproof member 362 of FIG. 3B and FIG. 3C) disposed between the display and the second housing. According to an embodiment, the electronic device may comprise a first heat dissipation member (e.g., the first heat dissipation member 370 of FIG. 3B and FIG. 3C), having a thickness less than or equal to a thickness of each of the plurality of waterproof members, disposed between the first waterproof member and the second waterproof member. According to an embodiment, the first heat dissipation member may include a first region (e.g., the first region 371 of FIG. 3B and FIG. 3C) disposed on a surface of the first hinge plate facing the display. According to an embodiment, the first heat dissipation member may include a second region (e.g., the second region 372 of FIG. 3B and FIG. 3C) disposed on a surface of the second hinge plate facing the display. According to an embodiment, the first heat dissipation member may include a third region (e.g., the third region 373 of FIG. 3B and FIG. 3C), connecting the first region and the second region, being deformable by movement of the first hinge plate and the second hinge plate. According to an embodiment, in an unfolded state of the electronic device in which a direction in which the surface of the first hinge plate faces corresponds to a direction in which the surface of the second hinge plate faces, at least a portion of the third region may pass through a gap between a side surface (e.g., the side surface 343c of FIG. 3B and FIG. 3C) of the first hinge plate and a side surface (e.g., the side surface 344c of FIG. 3B and FIG. 3C) of the second hinge plate, which face each other.

According to an embodiment, the electronic device may provide a structure capable of dissipating heat in the first housing and the second housing while reducing damage to the display due to external impact by the first heat dissipation member disposed under a plurality of reinforcing members.

According to an embodiment, the electronic device may comprise a plurality of reinforcing members (e.g., the plurality of reinforcing members 350 of FIG. 3B and FIG. 3C), attached to the display, including a first reinforcing member (e.g., the first reinforcing member 351 of FIG. 3B and FIG. 3C) facing the surface of the first hinge plate and spaced apart from the first hinge plate, and a second reinforcing member (e.g., the second reinforcing member 352 of FIG. 3B and FIG. 3C) facing the surface of the second hinge plate and spaced apart from the second hinge plate.

According to an embodiment, the electronic device may provide a structure capable of reducing damage to the display due to the external impact, since a size of a gap between the first reinforcing member and the second reinforcing member is minimized.

According to an embodiment, in the unfolded state, the at least a portion of the third region may be disposed within an intemal space (e.g., the intemal space 345 of FIG. 3B and FIG. 3C) of the hinge structure, disposed on another surface (e.g., the other surface 343b of FIG. 3B and FIG. 3C) of the first hinge plate opposite to the surface of the first hinge plate and another surface (e.g., the other surface 344b FIG. 3B and FIG. 3C) of the second hinge plate opposite to the surface of the second hinge plate.

According to an embodiment, the electronic device may provide a structure capable of reducing damage to the first heat dissipation member due to repetition of a change in the state of the electronic device, since the third region of the first heat dissipation member is deformable.

According to an embodiment, the electronic device may comprise a first adhesive member (e.g., the first adhesive member 381 of FIG. 3B and FIG. 3C) disposed between the surface of the first hinge plate and the first region. According to an embodiment, the electronic device may comprise a second adhesive member (e.g., the second adhesive member 382 of FIG. 3B and FIG. 3C) disposed between the surface of the second hinge plate and the second region.

According to an embodiment, the electronic device may provide a structure in which the first region and the second region of the first heat dissipation member are attached on the first hinge plate and the second hinge plate, respectively, through the first adhesive member and the second adhesive member.

According to an embodiment, the electronic device may comprise a second heat dissipation member (e.g., the second heat dissipation member 391 of FIG. 4A and FIG. 4B) disposed between the first region and the first reinforcing member. According to an embodiment, the electronic device may comprise a third heat dissipation member (e.g., the third heat dissipation member 392 of FIG. 4A and FIG. 4B), disposed between the second region and the second reinforcing member, spaced apart from the second heat dissipation member.

According to an embodiment, the electronic device may provide a structure capable of increasing heat exchange efficiency between the first housing and the second housing by the second heat dissipation member and the third heat dissipation member.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., intemal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101; 200; 300) comprising:
a hinge structure (340) including a hinge bracket (342), a first hinge plate (343) rotatable with respect to the hinge bracket (342), and a second hinge plate (344) distinct from the first hinge plate (343) and rotatable with respect to the hinge bracket (342);
a display (330) disposed on the first hinge plate (343) and the second hinge plate (344) across the hinge structure (340);
a plurality of reinforcing members (350), attached to the display (330), including a first reinforcing member (351) facing a surface (343a) of the first hinge plate (343) and spaced apart from the first hinge plate (343), and a second reinforcing member (352) facing a surface (344a) of the second hinge plate (344) and spaced apart from the second hinge plate (344); and
a first heat dissipation member (370) including a first region (371) interposed between the first reinforcing member (351) and the surface (343a) of the first hinge plate (343), a second region (372) interposed between the second reinforcing member (352) and the surface (344a) of the second hinge plate (344), and a third region (373) connecting the first region (371) and the second region (372) and being deformable by movement of the first hinge plate (343) and the second hinge plate (344),
wherein, in an unfolded state of the electronic device (101; 200; 300) in which a direction in which the surface (343a) of the first hinge plate (343) faces is the same as a direction in which the surface (344a) of the second hinge plate (344) faces, at least a portion of the third region (373) passes through a gap between a side surface (343c) of the first hinge plate (343) and a side surface (344c) of the second hinge plate (344), which face each other.

2. The electronic device (101; 200; 300) of claim 1,
wherein, in the unfolded state, a distance between the first reinforcing member (351) and the second reinforcing member (352) is shorter than a distance between the first hinge plate (343) and the second hinge plate (344).

3. The electronic device (101; 200; 300) of claim 1, further comprising:
a first housing (310) supporting a portion of the display (330);
a second housing (320), supporting another portion of the display (330), coupled to the first housing (310) so as to be rotatable with respect to the first housing (310) through the hinge structure (340);
a first waterproof member (361) disposed between the first housing (310) and the first reinforcing member (351); and
a second waterproof member (362), disposed between the second housing (320) and the second reinforcing member (352), spaced apart from the first waterproof member (361),
wherein the first heat dissipation member (370) is disposed between the first waterproof member (361) and the second waterproof member (362).

4. The electronic device (101; 200; 300) of claim 3,
wherein a thickness of the first heat dissipation member (370) is less than or equal to a thickness of each of the first waterproof member (361) and the second waterproof member (362).

5. The electronic device (101; 200; 300) of claim 1,
wherein, in a folded state of the electronic device (101; 200; 300) in which the surface (343a) of the first hinge plate (343) faces the surface (344a) of the second hinge plate (344), the third region (373) is spaced apart from the first reinforcing member (351) and the second reinforcing member (352).

6. The electronic device (101; 200; 300) of claim 1,
wherein, in the unfolded state, the at least a portion of the third region (373) is disposed within an intemal space (345) of the hinge structure (340), disposed on another surface (343b) of the first hinge plate (343) opposite to the surface (343a) of the first hinge plate (343) and another surface (344b) of the second hinge plate (344) opposite to the surface (344a) of the second hinge plate (344).

7. The electronic device (101; 200; 300) of claim 1,
wherein the third region (373) is:
unfolded as a state of the electronic device (101; 200; 300) changes from the unfolded state to a folded state of the electronic device (101; 200; 300) in which the surface (343a) of the first hinge plate (343) faces the surface (344a) of the second hinge plate (344); and
folded as the state of the electronic device (101; 200; 300) changes from the folded state to the unfolded state.

8. The electronic device (101; 200; 300) of claim 6, further comprising:
a first housing (310) supporting a portion of the display (330);
a second housing (320), supporting another portion of the display (330), coupled to the first housing (310) so as to be rotatable with respect to the first housing (310) through the hinge structure (340); and
a flexible printed circuit board (301) extending from the first housing (310) to the second housing (320) across the internal space of the hinge structure (340),
wherein at least a portion of the third region (373) is spaced apart from the flexible printed circuit board (301) in the internal space of the hinge structure (340).

9. The electronic device (101; 200; 300) of claim 1, further comprising:
a first adhesive member (381) disposed between the surface (343a) of the first hinge plate (343) and the first region (371); and
a second adhesive member (382) disposed between the surface (344a) of the second hinge plate (344) and the second region (372).

10. The electronic device (101; 200; 300) of claim 9,
wherein a location of an end (381a) of the first adhesive member (381) corresponds to a location of an end of the surface (343a) of the first hinge plate (343).

11. The electronic device (101; 200; 300) of claim 1, further comprising:
a second heat dissipation member (391) disposed between the first region (371) and the first reinforcing member (351); and
a third heat dissipation member (392), disposed between the second region (372) and the second reinforcing member (352), spaced apart from the second reinforcing member (352).

12. The electronic device (101; 200; 300) of claim 11,
wherein a side surface of the third heat dissipation member (392) and a side surface of the second heat dissipation member (391):
face each other in the unfolded state, and
face the third region (373) in a folded state of the electronic device (101; 200; 300) in which the surface (343a) of the first hinge plate (343) faces the surface (344a) of the second hinge plate (344).

13. The electronic device (101; 200; 300) of claim 1,
wherein the hinge structure (340) further includes a third hinge plate, disposed between the first hinge plate (343) and the second hinge plate (344), fixed to the hinge bracket (342), and supporting the display (330),
wherein the third region (373) includes:
a fixed portion (373c) fixed on the third hinge plate;
a first extending portion (373d) that, in the unfolded state, is disposed within a gap between the side surface (343c) of the first hinge plate (343) and a first side surface of the third hinge plate facing the side surface (343c) of the first hinge plate (343); and
a second extending portion (373e) that, in the unfolded state, is disposed within a gap between the side surface (344c) of the second hinge plate (344) and a second side surface of the third hinge plate facing the side surface (344c) of the second hinge plate (344).

14. The electronic device (101; 200; 300) of claim 13, further comprising:
a cushioning member (334) attached between the first reinforcing member (351) and the second reinforcing member (352) on a surface of the display (330), and
wherein the cushioning member (334) is deformable by movement of the first hinge plate (343) and the second hinge plate (344) to fold the display (330).

15. The electronic device (101; 200; 300) of claim 13, further comprising:
a first housing (310) supporting a portion of the display (330); and
a second housing (320), supporting another portion of the display (330), coupled to the first housing (310) so as to be rotatable with respect to the first housing (310) through the hinge structure (340),
wherein a rotation angle range of the second housing (320), which is rotatable with respect to the first housing (310), is smaller than a rotation angle range of the second hinge plate (344), which is rotatable with respect to the hinge bracket (342).
